# EUROPEAN PATENT SPECIFICATION

(11) **EP 0 385 695 B1**
(45) Date of publication and mention of the grant of the patent: **31.01.1996**
(21) Application number: 90302020.4
(22) Date of filing: 26.02.1990
(51) Int. Cl.: H04L 27/00, H04L 12/28

(54) **Communication system**
Nachrichtensystem
Système de communication

(30) Priority: 28.02.1989 US 317213; 28.02.1989 US 317214
(43) Date of publication of application: 05.09.1990
(73) Proprietor: FIRST PACIFIC NETWORKS, INC., Sunnyvale, California 94086 (US)
(72) Inventor: McNamara, Robert P., California 95136 (US); Murphy, Timothy P.y, California 94040 (US); Long, James C., California 94086 (US)
(74) Representative: Jones, Ian

(56) References cited:
- EP-A- 0 049 189
- EP-A- 0 139 034
- US-A- 4 313 205
- US-A- 4 425 666
- US-A- 4 686 490
- IEEE COMMUNICATIONS MAGAZINE, vol. 26, no. 11, November 1988, pages 33-44, IEEE, New York, NY, US; F. HALSALL et al.: "Design issues relating to the provision of integrated services on a broadband coaxial cable local area network"
- IEEE GLOBAL TELECOMMUNICATIONS CONFERENCE & EXHIBITION, Hollwood, Florida, 28th November - 1st December 1988, vol. 3, pages 1255-1259, IEEE, New York, US; Y. SAITO et al.: "TDMA telephone service system on a broadband coaxial network"
- J.G. PROAKIS: "Digital communications", 1989, pages 285-289, McGraw-Hill Book Co., New York, US

## Description

The present invention relates to a communication system suitable for use as a local area network communication system, with combination of time-division of multiplexing and frequency-division multiplexing in a multiple-channel broadband communications environment.

Many offices today use a network for transmission of data between personal computers, terminals and other devices within the office. Several types of architecture are used. In a star network, all nodes are coupled to a central point of the star, which provides centralized control of the flow of data. The central control on such a system can multiplex data in time from different nodes by alternately holding data in a buffer from one or the other transmitting node until a timeslot is available. A central control unit provides the synchronization necessary to insert data into assigned or available timeslots. One limitation of the star network is that the bandwidth available through the switch matrix is limited. Hence, means must be provided for multiple nodes to transmit data to the central control unit within a common broadband frequency channel.

A further system architecture employed for data communication is a token ring network. In a token ring network, a single cable or communication line is passed through each and every node, and a token packet is relayed from one node to the next, with the node desiring to transmit holding onto the token packet until its communication period is terminated. A node cannot transmit unless it has the token, and therefore, only one node is permitted to transmit at any time. This type of time-division multiplexing transmits data in irregular bursts, rather than in assigned time slots. This type of transmission is appropriate for data communications which typically occur in infrequent long bursts. Voice communications, on the other hand, require a substantially continuous connection over an extended period of time.

A still further data communication system architecture often employed for data communication is the Ethernet system. In the Ethernet system, a data node listens to see if the channel is in use before transmitting. While transmitting, the data node listens to determine if the data transmitted is received in the same form. If the received data differs, then it is assumed another node transmitted at the same time, resulting in a collision, and thus in scrambled data. The transmitting node then retransmits a packet at a random time later. Thus, neither central control of the network bandwidth acquisition of time slots nor central timing is needed.

The following patents were uncovered in a search for three-level frequency shift keyed (FSK) modulation systems.

Digital Data Modulator and Digital-to-analog Converter. U.S. Patent No. 4,686,490. This patent discloses a digital modulator for selectably generating differential phase shift keyed (PSK) data signals and frequency shift keyed (FSK) data signals. A dibit encoder converts scrambled dibit into two phase-shifting control signals. A three-tap finite impulse response filter generates carrier phase signals by splitting each cycle of the selected carrier clock into eight phases, and, for psk operation, provides phase shifting in response to the two phase-shifting control signals. A multiplexer selects one of the phase-shifter high frequency clocks in response to the carrier phase signals. A signal selector converts the selected phase-shifted high frequency clock signal into a pulse width-modulated clock signal. The signal filter provides the PSK/FSK data signal by integrating the pulse width modulated clock signal and also provides band pass filtering to clean up the waveform. The result is reported to be a PSK/FSK data signal with low distortion, reduced transient dc, and decreased sensitivity to temperature and component selection since bit weighting resistors are not required to generate the output waveform. Also disclosed is a digital-to-analog converter/data modulator for generating FSK and PSK data signals and a method for generating frequency-modulated signals.

Processes for Generating Duo-binary FSK, Tamed FSK and TFM Modulations and Modulators Applying Those Processes. U.S. Patent No. 4,426,710. This patent discloses methods to obtain a duo-binary FSK modulation, wherein the modulating binary signal train has a three state partial response and is fed through a precoding, a transition-type coding, a simplified msk modulation at the carrier frequency, a frequency division by two, and a multiplication by the same signal delayed by one binary element period. In order to obtain a "tamed FSK" modulation, the modulating binary signal train has a five state partial response and is fed through precoding, a transition-type coding, a simplified msk modulation at the carrier frequency, a frequency division by two, a multiplication by the same signal delayed, for one part, by one binary element period and, for another part, by two binary element periods. A tfm modulation is obtained by using the FSK duo-binary generating process. In a tfm modulator, a train of binary signals is applied to a partial response precoding circuit, the output of which is connected to a transition-type coding circuit, the output of which is connected to the input of a simplified msk modulator.

Data Encoding and Decoding Communication System for Three Frequency FSK Modulation and Method Therefor. U.S. Patent No. 4,425,666. This patent discloses a system for three frequency FSK modulation wherein binary data bits are sequentially encoded into a ternary system of channels designated "1", "0" and "C", so that a data bit is encoded and transmitted in a "C" channel whenever it is the same as the previous data bit and wherein a transmission in the "C" channel is decoded as a continuation of the previous data bit. The data clock is recovered from the data stream at the transition between data bits and repeated data bits are detected as errors.

The following patent was uncovered in a search for quadrature phase shift keyed (QPSK) demodulation systems as they might relate to the subject invention:

Rapid Acquisition Shift Keyed Signal Demodulator, U.S. Patent No. 4,359,692. This patent describes a prior demodulator suitable for QPSK which requires a voltage controlled oscillaotr in the acquisition loop. The present invention does not require a voltage controlled oscillator in the acquisition loop and as a consequence is much faster in reaction.

The following patents were uncovered in reference to a Maximum Likelihood Detection Circuit as referred to in this application:

Carrier Synchronization and Symbol Synchronization in Offset QPSK Burst Communications, U.S. Patent No. 4,313,205. This patent describes a carrier synchronization scheme based on average phase over a periodic interval and wherein phase synchronization is achieved by reliance on the filtered and demodulated upper sideband of the output of a delay and multiply circuit.

Method for Determining the Optimum Sampling Times for a QPSK or QAM Received Signal, U.S. Patent No. 4,520,492. This patent describes a detector system wherein the amplitude of two quadrature components of a received signal are coupled and the point of identical amplitude is selected as the point of sampling.

IEEE Communications Magazine Vol 26, No. 11, November 1988 pages 33-44 "Design issues relating to the provision of integrated services on a broadband coaxial cable local area network" describes an approach to local-area networking and the design of three Modems designed to meet specific customers requirements including an integrated voice-and-data modem, a 2Mb/s Modem for personal computer networks, and a 10Mb/s CSMA/CD Ethernet Modem for high speed computer networks.

According to the invention a modulation and demodulation system is provided for a network having a first broadband communications channel or transmitting bus and a second broadband communications channel or receiving bus, wherein the first broadband communications channel is for passing information upstream in bursts to a head end and the second broadband communications channel is for passing information downstream continuously from the head end to remote nodes. All nodes of the system are coupled to both the first communications channels and to the second communication channel. According to the invention, modulation of signals applied to the first communication channel is optimized for burst communication from a plurality of sources to a central or head end node, and modulation applied to the second communications channel is optimized for continuous communication from the central node to a target node. Two-way voice communication and two-way data communication can be supported simultaneously through such a dual-channel system. A system according to the invention uses a relatively small number of channels available in a broadband environment such that it can coexist with third party equipment as used in a cable television or closed circuit television system employing coaxial cabling.

In a specific embodiment of the invention, communication between remote nodes and a central control unit is provided via three-level class four partial response modulation on a frequency shift keyed carrier wherein packets are communicated as bursts. Three-level class four partial response modulation provides a one bit per Hertz efficiency and exhibits a power spectral density of zero energy for zero input regardless of the differential encoding of previous states. This type of partial response coding is characterized by zero energy at d.c.

In another specific embodiment of the invention, communication between remote nodes and a central control unit is provided via differential offset quadrature phase shift keyed (QPSK) modulation on a carrier wherein packets are communicated as bursts. This type of modulation provides a one bit per Hertz efficiency.

In contrast, the communication between the central unit (head end) and any one of a choice of target nodes through the second communication channel is by means of three-level class one partial response AM-PSK modulated onto a carrier, which is optimized for continuous operation. Class one partial response is an ideal format where continuous communication is contemplated because the modulator and demodulator is simple, and the demodulator is particularly inexpensive, which makes it suitable for use in a large number of slave receivers. In addition, means are provided for synchronizing the phase of signals received from remote nodes due to differences in distances between the remote nodes and the head end.

The invention is further described below, by way of example, with reference to the accompanying drawings, in which:

Figure 1 is a block diagram of a communications system according to the invention.

Figure 2 is a depiction of the frequency spectrum for a class four partial response signal.

Figure 3 is a block diagram of a specific embodiment of a receiver and transmitter within a head end or central control node according to the invention.

Figure 4 is a block diagram of a maximum likelihood detector (MLD) according to the invention.

Figure 5 is a detailed block diagram of the rf section of a remote node for reception of a signal from the central control node and for transmission of a signal to the central control node according to the invention.

Figure 6 is a block diagram of a communications system according to the invention.

Figure 7 is a block diagram of a specific embodiment of a receiver and transmitter within a head end or central control node according to the invention.

Figure 8 is a block diagram of a maximum likelihood detector (MLD) according to the invention.

Figure 9 is a detailed block diagram of the rf section of a remote node for reception of a signal from the central control node and for transmission of a signal to the central control node according to the invention.

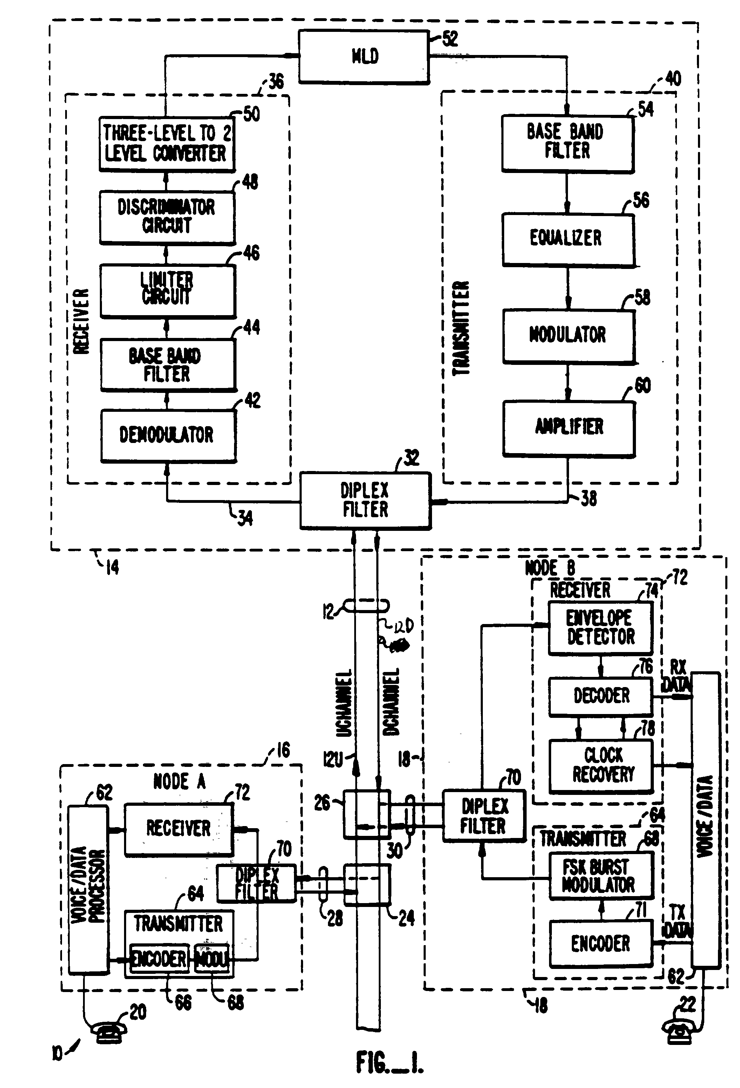

Referring to Figure 1, there is shown a communication system in accordance with the invention which comprises wideband media, preferably broadband coaxial or fiber optic cables, capable of supporting a plurality of channels simultaneously, herein designed medium 12, a head end device, commonly designated the head end retransmission unit (HRU) 14, and a plurality of node devices, herein node device A 16 and node device B 18 by way of example. Node devices A and B are, for example, voice interface units (VIU), each of which is respectively coupled to a telephone 20, 22. In addition, there may be other nodes, not shown, for connecting to the public switch telephone network, to a network manager or the like.

Each of the nodes is connected to the medium 12 through taps 24, 26, respectively, which in turn feed a tap transmission line 28, 30, respectively. In the preferred embodiment, the tap transmission lines 28, 30 are of the same medium as medium 12, capable of supporting multiple channels of communication.

The medium 12 and the tap transmission lines 28 and 30 support band-limited channels of communication, typically of about 6 MHz bandwidth per channel. In a coaxial embodiment, there are two groups of channels, typically eight channels in each group designed upstream channels and downstream channels. Upstream channels may, for example, be selected in the frequency spectrum between about 56 MHz and 100 MHz. The downstream channels may, for example, be selected to be in the frequency region between about 145 MHz and 195 MHz, all preferably having modulators and demodulators designed to operate within the defined spectrum of CATV.

According to the invention, signals originating at the node A 16 are supplied through tap 24 to one of a selected upstream channels 12U of the medium 12 to the HRU 14 wherein the signal is processed and rebroadcast to a downstream channel 12D of the medium 12 wherein it is intercepted at node B 18, processed and provided to the designated output device, such as telephone 22. According to the invention, the modulation scheme supported on the upstream channel 12U is different than the modulation scheme supported on the downstream channel 12D, the upstream channel 12U supporting a modulation scheme of burst communication, and the downstream channel 12D supporting a modulation scheme of continuous broadcast communication. In the preferred embodiment, the modulation schemes have an efficiency of 1 bit per Hertz (B/Hz), and the downstream channel contains sufficient information to recover a clock signal.

The HRU 14 comprises a diplex filter 32, coupled to the medium 12 for separating the incoming signals on the upstream channel 12U from signals placed on the downstream channel 12D. The diplex filter has an output coupled through a signal line 34 to a receiver 36 and has an input coupled to a signal channel 38 connecting it with a transmitter 40. The receiver 36 is a receiver suited to demodulate and detect a signal applied through the upstream channel 12U to the HRU 14. In a specific embodiment according to the invention, the receiver 36 comprises a superhetrodyne frequency shifter 42 whereby the broadband signal is shifted to an intermediate frequency, a bandpass filter 44 coupled to receive the output of the superhetrodyne frequency shifter 42, a limiter circuit 46 coupled to receive the output of the baseband filter 44, a discriminator circuit 48 coupled to receive the output of the limiter circuit 46, and a three-level to two-level converter 50 coupled to receive the output of the discriminator circuit 48. The three-level to two-level converter converts three-level data into two-level data for further processing. The output of the converter 50 is provided to a maximum likelihood detector (MLD) 52, the function of which is to adjust in time the bit position of each received signal so that the system clock can strobe received data in the middle of the signal representing the digital bit. Its output is provided to a transmitter 40, in a preferred embodiment, in a three-level code, initially to a baseband filter 54. The output of the baseband filter 54 of the transmitter 40 is provided to an equalizer 56, the output of which is provided to a modulator 58. The modulator 58 modulates the data signal to the chosen downstream channel frequency for transmission. The output of the modulator 58 is provided to an amplifier 60, which, in one or more amplifier stages, generates sufficient RF signal output to support signals in the downstream channel 12D. The output of the amplifier 60 is provided on signal line 38 to the diplex filter 32 which in turn directs the signal to the downstream channel 12D.

Signals are supplied to the medium 12 from the nodes, for example, from node device A 16. Node device A 16 receives a signal in appropriate format from a telephone or data source, which is formatted in an appropriate voice/data processor 62. The voice/data processor 62 generates the formats with protocols necessary to supply the information in its appropriate hierarchy of transmission. The details of a the voice/ data processor 62 depend on the nature of protocols not directly relevant to the present invention.

Encoded data is applied from the voice/data processor 62 to a transmitter 64. The transmitter 64 includes an encoder 66 and a modulator 68 operative in accordance with a specific embodiment of the invention. The encoder 66 is coupled to receive a digital data stream from the voice/data processor 62 and to supply an encoded signal to the modulator 68, and the modulator 68 modulates the encoded signal to the appropriate channel of the upstream channel 12U. The output of the modulator 68 is supplied to a diplex filter 70 which is coupled to the tap transmission line 28. Signals received through the diplex filter 70 on the tap transmission line 28 from the downstream channel 12D are coupled to a receiver 72, which is a subsystem suited to receive signals on the downstream channel as encoded via MLD 52 of the HRU 14.

The subsystems and elements of the node B device 18 are identical to those of the node A device 16 and have been so designated. Referring to the node B device 18, an example of one specific receiver 72 in accordance with the invention, is illustrated. The receiver 72 of the node B device 18 comprises an envelope detector 74 coupled to receive signals from the diplex filter 70 and to provide a detected signal to a decoder 76 whereby received data is output to a voice data processor 62. Associated with a decoder 76 is a clock recovery circuit 78 which is operative to extract a clock signal from the received data and to apply the recovered clock to the decoder 76 as well as to the voice/data processor 62.

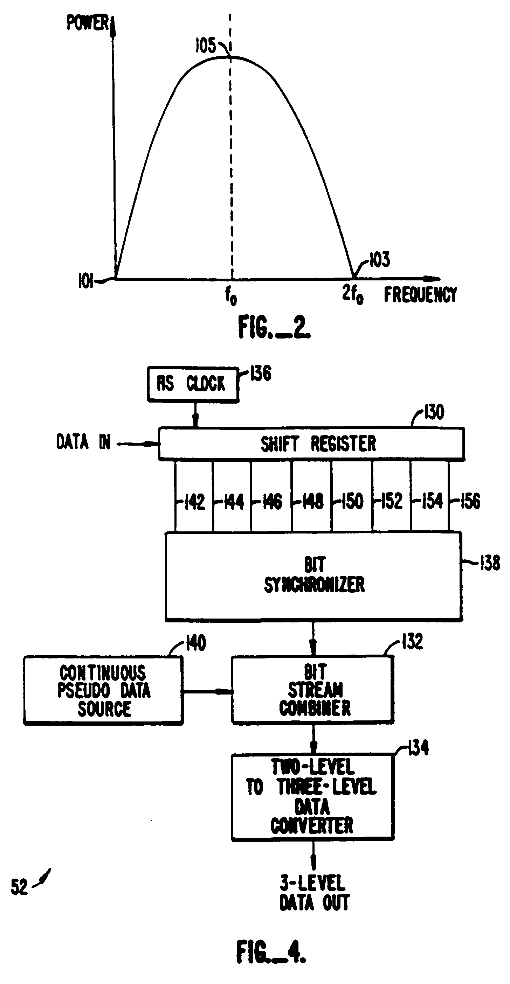

In accordance with a specific embodiment of the invention, the transmitter 64 of the node devices 16, 18 employs a class 4 three level partial response modulation scheme having three frequency shift keyed frequencies, F₀-Δ, F₀ and F₀+Δ, where in the specific embodiment, delta is approximately 2 MHz. Class 4 partial response modulation in three levels provides a bit efficiency of 1 bit per Hertz. Class 4 is employed because it is a line code having no energy at d.c. Referring to Figure 2, there is shown a power spectrum of a class 4 signal. At the d.c. point 101 and at the point of twice the center frequency 103, the power in the power spectrum is always zero. At the center frequency point 105, the power is maximum. In the present embodiment, the power spectrum center frequency has been selected to be 2.5 MHz. Thus, the full bandwidth of the class 4 spectrum is 5 MHz with no energy at d.c. or above 5 MHz. Because there is no energy into d.c., there is no need to provided direct coupling for the three-level data to a frequency shift keyed oscillator. Consequently, the frequency shift keyed oscillator can be phase locked through a narrow bandwidth phase locked loop, that is, a loop having a bandwidth of less than 5 MHz, to the correct center frequency. When signal modulation is added to provide class 4 three level modulation at baseband, it will deviate the carrier outside of the loop bandwidth and thus produce the desired modulation at the appropriate channel frequency.

Class 4 code is a unique line code in that it produces a zero output at the conclusion of each packet regardless of the differential encoding comprising some of the states characteristic of a partial response code. The partial response produces an output which is the sum of the present modulation state or level and the previous modulation state or level. The modulation format herein employed according to a specific embodiment of the invention gives one bit per Hertz spectral efficiency and yet has zero energy at d.c.

Figure 3 illustrates a specific embodiment of a receiver 36 and a transmitter 40 within the head end device 14. In accordance with the invention, the receiver 36 is adapted to receive digital data in a first structured form and the transmitter 40 is adapted to relay the same digital data in a structured form different from the received form. Within the receiver 36 is a superhetrodyne frequency shifter 42 which comprises a frequency synthesizer 80 coupled to a mixer 82 to which is supplied the input signal from signal line 34 through an amplifier 84. The output of the mixer 82 is provided to the bandpass filter 44, which is a filter network producing an output signal at an intermediate frequency (IF). The center frequency of the signal may, for example, be about 25 MHz, and the filter 44 may have a center frequency of about 25 MHz with a bandwidth of about 6 MHz.

The output of the baseband filter 44 may be provided to an amplifier 86 which in turn is coupled to carrier detector circuit 88 and also to a limiter circuit 46. The carrier detector circuit may include a conventional envelope detector 90, such as a diode, the output of which is coupled through a lowpass filter 92 to a comparator 94. The output of the comparator 94 is a two-level signal indicating presence or absence of a carrier.

The limiter circuit 46 may comprise a cascade of one or more limiter modules 96 which may optionally be a.c.-coupled through a capacitor 98 to one another and then coupled to the frequency discriminator circuit 48. Because there is no energy at d.c., there is no need to direct couple to the frequency discriminator 48. The frequency discriminator 48 includes, for example, an amplifier 100 coupled to a power splitter 102. The power splitter 102 has an output coupled through a delay circuit 104, which introduces, for example, a 75 nanosecond delay, and another output is provided to a mixer 106. A second input from the mixer 106 is from the delay circuit 104, thereby mixing two signals which in turn produces a product which is provided to a lowpass filter 108. The output of the lowpass filter 108 is provided to an equalizer 110, the output of which is three-level data representing 1, 0 and -1. Three level data is fed to a three-level to two-level converter circuit 50 which is activated when the carrier detect signal is logically True from carrier detector 88. A switch 112 serves to activate the converter 50. The converter 50 consists of first and second comparators 114 and 116, the outputs of which are fed through an OR gate 118 to a two level data output line 120. The comparators 114 and 116 are respectively referenced to a positive or high-voltage reference 115 at a noninverting terminal and to a negative or low-voltage reference 117 at an inverting terminal such that three distinct input levels at the respective comparator inputs are converted to either a True (representing the presence of a 1 or -1 signal level) or a False (representing a signal level between the respective voltage reference threshold levels).

The output on the two-level data output line 120 is provided to the MLD 52, as explained hereinbelow.

The transmitter section 40 comprises a baseband filter 122 which receives three-level input data from the MLD 52 and provides an output signal to an equalizer 124. The output of the equalizer 124 is fed through attenuator 126 as necessary to provide output level adjustment and thereafter, through a mixer 127 which also received an input from a frequency synthesizer 128 and produces an output at the desired output frequency for the downstream channel 12D (Figure 1) through the amplifier 128 and the diplex filter 32. The modulation provided by the transmitter 40 is a three-level class one partial response encoding scheme AM-PSK modulated onto a carrier, which yields one bit per Hertz spectral efficiency. Class one partial response modulation is a preferred format for simple modulators and demodulators where the signal is operating is a continuous mode. Where the signal is continuous, a received signal can be averaged and used to produce an automatic gain control signal to provide the desired gain. The signal originates as a burst signal at the head end. However, in the MLD 52, the signal is merged with a head-end pseudo signal consisting of a bit stream of 1 0 1 0 1 0 in the preferred implementation. Information from the source of burst signal is merged to provide the desired encoding. Thus, the head end transmitter 40 always generates and transmits a continuous carrier to the downstream channel 12D.

Referring to Figure 4, there is shown a block diagram of one type of maximum likelihood detector (MLD) 52 suitable for use in accordance with the invention. The MLD 52 comprises a shift register 130, a bit stream combiner 132 and a two-level to three-level data converter 134. The shift register 130 has associated therewith a high-speed clock 136 and a bit synchronizer 138. The bit stream combiner 132 has associated therewith a continuous pseudo data source 140, a function of which is to provide a continuous string of pseudo data, for example, 1 0 1 0 1 0 format data in a pseudo-idle state. The bit stream combiner combines data received from the continuous pseudo data source 140 and data received from the shift register 130 into a continuous data stream. The continuous data steam is then provided to the data converter 134 where two level data is converted to three level data. The output of the data converter 134 is coupled to the transmitter 40 of the HRU 14.

The purpose of the MLD 52 is to align data for optimum reception. The various signals received in burst mode through the HRU receiver 36. Each exhibit different phases as a result of differences in distance along the upstream channel 12U from the HRU 14, as well as differences in filter delays and differences in the phase of any local clock. The MLD 52 adjusts for differences in the phase of the input data so that the system clock used in connection with receiving the data in a synchronous format can strobe the received data at or near the midpoint of the bit in the bit stream. To this end, the shift register 130 is clocked by a high speed clock 136 at, for example, eight times the input data rate whereby each input bit is shifted to eight possible positions in turn for output at a selected tap 142, 144, 146, 148, 150, 152, 154 or 156. In the specific embodiment, each tap of the shift register thus presents an output data stream differing in time delay by one eight bit from the adjacent tap. The bit synchronizer 138 monitors each one of the taps and selects by means of appropriate optimization a bit stream from one of the taps, providing as its output a bit stream to the bit stream combiner 132. The bit synchronizer 138 may, for example, include a multiplexer and means for checking each of the input bit streams for errors due to sampling at a less than optimum phase. Should it be deemed unnecessary to adjust the phase automatically, the bit synchronizer may comprise a simple selector switch coupling one selected tap through to the bit stream combiner 132.

MLD 52 operates by having the bit synchronizer 138 examine the data bits as they pass along the shift register 130. The time relationship between the rising edges and the falling edges of the data bits are compared to those of the system clock. Based upon the calculations made by the bit synchronizer 138, the appropriate shift register tap among the eight possible taps 142-156 is used to extract the data and send it to the bit stream combiner 132. This calculation estimates the center of the data bit.

The center of the data bit must be known relative to the system clock. (The system clock is derived from the high speed clock 136 which also runs the shift register 130.) The bit synchronizer 138 examines one of the lines 142-156 and notes when the edges of the data bits occur with respect to each other and with respect to the system clock. The time relationships are measured in terms of the periods of the high speed clock 136. This examination occurs on the first portion of the incoming data stream which has a preamble epecially designed to ease the task of the bit synchronizer (usually a 1 0 1 0 1 0 1 0 sequence) and also to allow the synchronization process to occur before the message bits arrive.

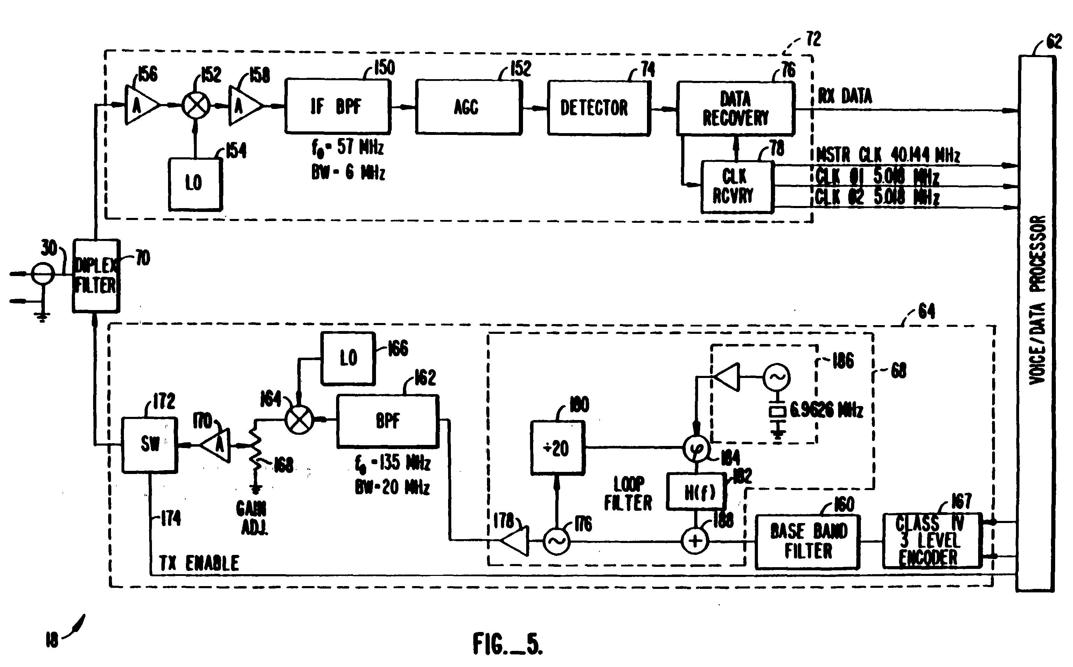

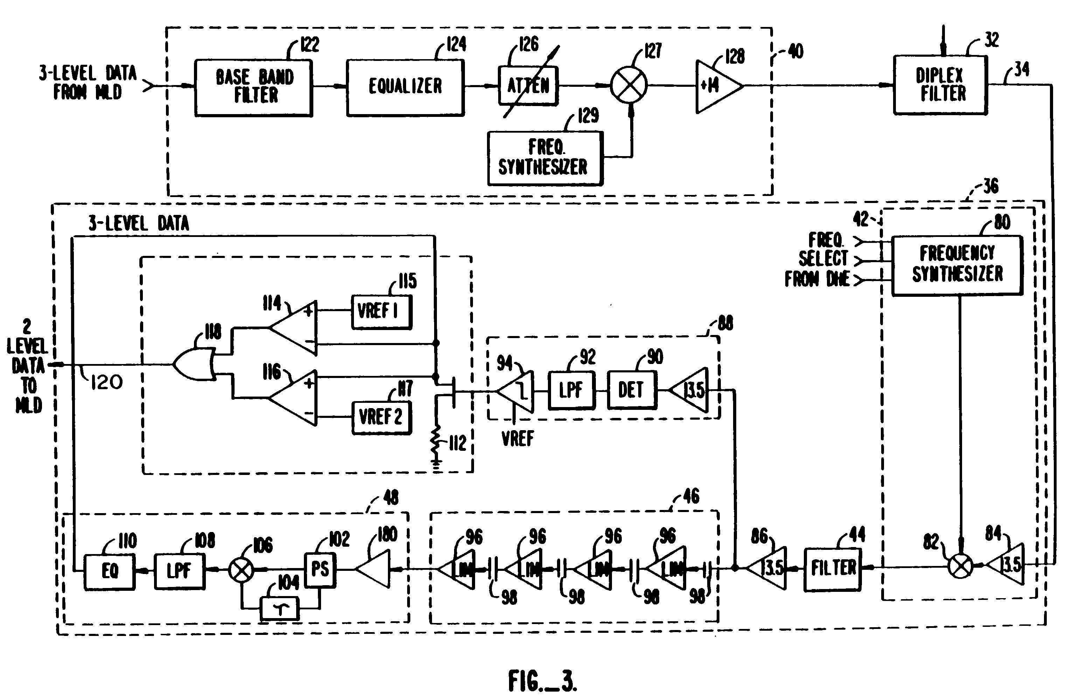

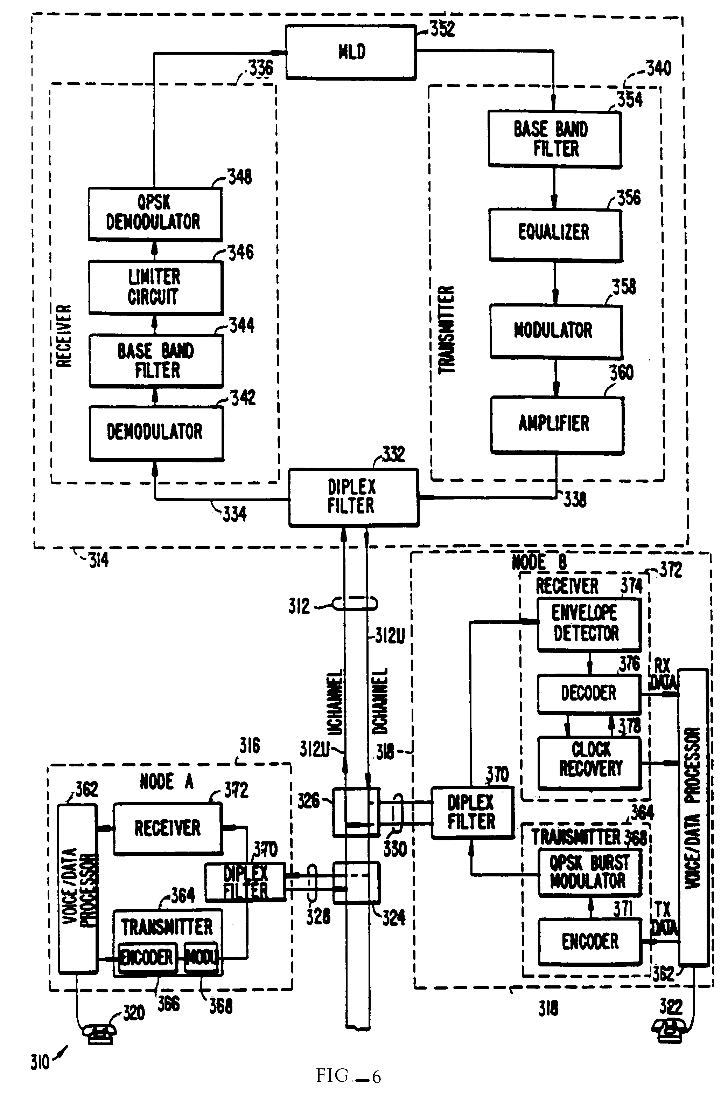

Referring again to Figure 5, the data clock CLK phase 1 and CLK phase 2, at the nodes is derived from the bit rate of the continuous downstream bit rate transmitted by the head end 14. Thus, the burst transmissions from the nodes 16, 18 to the head end 14 are at a frequency known to the head end 14 but at an unknown phase. Once the MLD 52 determines the phase, that phase is constant throughout the burst transmission from the node 16 or 18. Therefore, once the MLD 52 ascertains the phase of the preamble it does not make any further adjustments for the remainder of the burst transmission from the node 16 or 18.

The center of the bit times are calculated by taking the bit period, that is, the time between the start and the end of a bit as measured in high speed clock 136 periods, and dividing by two. This measurement can be made by a counter within bit synchronizer 138 which is started when a bit transition occurs and is stopped when the next transition occurs. A similar counting method can be used to determine the time relationship between the bit edges and the master clock edges. The appropriate shift register 130 output 142-156 to take the data from is found from the time relationships between the data edges and the master clock edge. The implementation can be done from a look-up table in a memory within the bit synchronizer 138 or can be calculated in real time with either hardwired logic or a fast dedicated microprocessor.

Within the transmitter 40, the output of the equalizer 124 through the attenuator 126 is provided to a mixer 127, the output of which is coupled to the amplifier 128. The mixer 127 is coupled to a frequency synthesizer 129 which supplies the local oscillator signal used to select the channel for the downstream channel 12D.

Referring now to Figure 5, there is shown a detailed block diagram of the RF section of a node device, for example, node device B 18 in accordance with the invention, having a receiver 72, a diplexer 70 and transmitter 64 and voice/data processor 62. Understanding of the voice/data processor 62 is not necessary to understand the present invention. Its function is to provide transmit data to the transmitter 64, together with any clock signals and control signals, and to receive data from the receiver 72, as well as a master clock signal and other related clock signals.

Referring to the receiver 72, there is shown a simple detector 74 with decoder 76 and clock recovery circuit 78. The circuitry operates at an intermediate frequency, and to this end is provided with an intermediate frequency bandpass filter 150 with a center frequency of 57 MHz and a bandwidth of 6 MHz. It is coupled to receive a signal from a mixer 152 which is coupled to receive a local oscillator signal from a local oscillator 154 and the information-carrying signal through a buffer amplifier 156. The output of the IF bandpass filter 150 is coupled to an automatic gain control circuit 152. The output of the automatic gain control circuit 152 is coupled to the detector 74, which may be a diode type envelope detector. A data recovery circuit 76 is coupled to received the output of the envelope detector 74.

The signal received through the diplex filter 70 is a partial response three level class one signal, which has a desired a one bit per Hertz spectral efficiency. The class 1 partial response format is an ideal format for a simple modulator and demodulator so long as the system is operating in a continuous mode. The operation in a continuous mode allows the incoming signal to produce an AGC signal at the AGC circuit 152 providing compensation for the dynamic range of variations which can be expected at the input. The data recovery circuit is a simple bit synchronous detector which allows recovery of the bit stream in connection with the recovered clock signal from a clock recovery circuit 78. The data recovery circuit may, for example, be a J-K flipflop clocked by a recovered clock signal, where its output is fed to a suitable buffer of the voice/data processor 62. The clock recovery circuit 78, may be a voltage controlled oscillator which is steered or triggered by the edge of the transitions derived from data extracted from the data recovery circuit.

The transmitter 64 comprises a class four three level encoder 71 coupled through a bandpass filter 160 to a burst modulator 68. The output of the burst modulator 68, which is an analog phase locked loop, is coupled to a bandpass filter 162, the output of which is coupled through a mixer 164 which is coupled to a local oscillator 166. The output of the mixer 164 is provided through a gain adjustment circuit 168 to an output amplifier 170, and the output amplifier 170 is fed through a PIN switch 172 to the diplex filter 70. The PIN switch 172 is controlled by a transmit enable line 174 and is used to gate the signal burst applied through the diplex filter 70 to the tap transmission line 30.

The burst modulator 68 comprises a phase-locked loop consisting of a steered oscillator 176 having one output coupled to an output buffer amplifier 178 and another output coupled to a divide-by-20 circuit 180, the output of which is coupled to a phase detector 184 which compares phase with a stable frequency source 186. The output of the phase detector 184 is coupled to a loop filter 182 whose output is coupled to a summing junction 188 which also receives as input the output of the baseband filter 160. When there is no data being received from the voice/dataprocessor 62, the class IV 3 level decoder (71) output is at zero volts and zero energy, which allows the phase locked loop feedback circuit in the burst modulator 68 to remain at the center of the three possible frequencies. The switch 172 is in the off condition during these times. When the voice/data processor 62, has data to be transmitted, it turns on the switch 172 which allows a signal to be sent to the diplex filter 70. The class IV 3 level encoder 71 then receives data from the voice/data processor 62 and passes it to the burst modulator 68 via the baseband filter 160. This frequency modulates the burst transmitter 68 between the three possible frequencies in accordance with the 3 level encoded data. At the end of the data packet, the class IV 3 level encoder output is at zero volts and zero energy, and the switch 172 is turned off.

Referring to Figure 6, there is shown a communication system in accordance with the invention which comprises wideband media, preferably broadband coaxial or fiber optic cables, capable of supporting a plurality of channels simultaneously, herein designed medium 312, a head end device, commonly designated the head end retransmission unit (HRU) 314, and a plurality of node devices, herein node device A 316 and node device B 318 by way of example. Node devices A and B are, for example, voice interface units (VIU), each of which is respectively coupled to a telephone 320, 322. In addition, there may be other nodes, not shown, for connecting to the public switch telephone network, to a network manager or the like.

Each of the nodes is connected to the medium 312 through taps 324, 326, respectively, which in turn feed a tap transmission line 328, 330, respectively. In the preferred embodiment, the tap transmission lines 328, 330 are of the same medium as medium 312, capable of supporting multiple channels of communication.

The medium 312 and the tap transmission lines 328 and 330 support band-limited channels of communication, typically of about 6 MHz bandwidth per channel. In a coaxial embodiment, there are two groups of channels, typically eight channels in each group designed upstream channels and downstream channels. Upstream channels may, for example, be selected in the frequency spectrum between about 56 MHz and 100 MHz. The downstream channels may, for example, be selected to be in the frequency region between about 145 MHz and 195 MHz, all preferably having modulators and demodulators designed to operate within the defined spectrum of CATV.

According to the invention, signals originating at the node A 316 are supplied through tap 324 to one of a selected upstream channels 312U of the medium 312 to the HRU 314 wherein the signal is processed and rebroadcast to a downstream channel 312D of the medium 312 wherein it is intercepted at node B 318, processed and provided to the designated output device, such as telephone 322. According to the invention, the modulation scheme supported on the upstream channel 312U is different than the modulation scheme supported on the downstream channel 312D, the upstream channel 312U supporting a modulation scheme of burst communication, and the downstream channel 312D supporting a modulation scheme of continuous broadcast communication. In the preferred embodiment, the modulation schemes have an efficiency of one bit per Hertz (B/Hz), and the downstream channel contains sufficient information to recover a clock signal.

The HRU 314 comprises a diplex filter 332, coupled to the medium 312 for separating the incoming signals on the upstream channel 312U from signals placed on the downstream channel 312D. The diplex filter has an output coupled through a signal line 334 to a receiver 336 and has an input coupled to a signal channel 338 connecting it with a transmitter 340. The receiver 336 is a receiver suited to demodulate and detect a signal applied through the upstream channel 312U to the HRU 314. In a specific embodiment according to the invention, the receiver 336 comprises a superhetrodyne frequency shifter 342 whereby the broadband signal is shifted to an intermediate frequency, a bandpass filter 344 coupled to receive the output of the superhetrodyne frequency shifter 342, a limiter circuit 346 coupled to receive the output of the baseband filter 344, a QPSK demodulator circuit 348 coupled to receive the output of the limiter circuit 346. The output of the QPSK demodulator 348 is provided to a maximum likelihood detector (MLD) 352, the function of which is to adjust in time the bit position of each received signal so that the system clock can strobe received data in the middle of the signal representing the digital bit. Its output is provided to a transmitter 340, in a preferred embodiment, in a three-level code, initially to a baseband filter 354. The output of the baseband filter 354 of the transmitter 340 is provided to an equalizer 356, the output of which is provided to a modulator 358. The modulator 358 modulates the data signal to the chosen downstream channel frequency for transmission. The output of the modulator 358 is provided to an amplifier 360, which, in one or more amplifier stages, generates sufficient RF signal output to support signals in the downstream channel 312D. The output of the amplifier 360 is provided on signal line 338 to the diplex filter 332 which in turn directs the signal to the downstream channel 312D.

Signals are supplied to the medium 312 from the nodes, for example, from node device A 316. Node device A 316 receives a signal in appropriate format from a telephone or data source, which is formatted in an appropriate voice/data processor 362. The voice/data processor 362 generates the formats with protocols necessary to supply the information in its appropriate hierarchy of transmission. The details of a the voice/ data processor 362 depend on the nature of protocols not directly relevant to the present invention.

Encoded data is applied from the voice/data processor 362 to a transmitter 364. The transmitter 364 includes an encoder 366 and a modulator 368 operative in accordance with a specific embodiment of the invention. The encoder 366 is coupled to receive a digital data stream from the voice/data processor 362 and to supply an encoded signal to the modulator 368, and the modulator 368 modulates the encoded signal to the appropriate channel of the upstream channel 312U. The output of the modulator 368 is supplied to a diplex filter 370 which is coupled to the tap transmission line 328. Signals received through the diplex filter 370 on the tap transmission line 328 from the downstream channel 312D are coupled to a receiver 372, which is a subsystem suited to receive signals on the downstream channel as encoded via MLD 352 of the HRU 314.

The subsystems and elements of the node B device 318 are identical to those of the node A device 316 and have been so designated. Referring to the node B device 318, an example of one specific receiver 372 in accordance with the invention, is illustrated. The receiver 372 of the node B device 318 comprises an envelope detector 374 coupled to receive signals from the diplex filter 370 and to provide a detected signal to a decoder 376 whereby received data is output to a voice data processor 362. Associated with a decoder 376 is a clock recovery circuit 378 which is operative to extract a clock signal from the received data and to apply the recovered clock to the decoder 376 as well as to the voice/data processor 362.

In accordance with a specific embodiment of the invention, the transmitter 364 of the node devices 316, 318 employs an offset quadrature phase shift keyed modulation which provides a bit efficiency of one bit per Hertz.

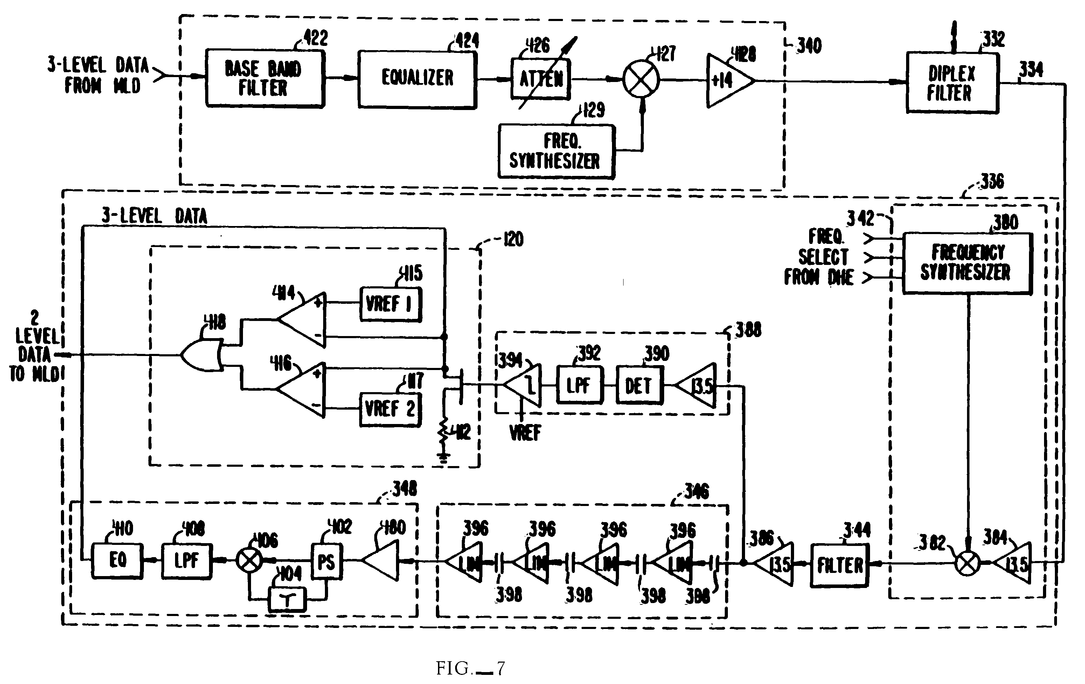

Figure 7 illustrates a specific embodiment of a receiver 336 and a transmitter 340 within the head end device 314. In accordance with the invention, the receiver 336 is adapted to receive digital data in a first structured form and the transmitter 340 is adapted to relay the same digital data in a structured form different from the received form. Within the receiver 336 is a superhetrodyne frequency shifter 342 which comprises a frequency synthesizer 380 coupled to a mixer 382 to which is supplied the input signal from signal line 334 through an amplifier 384. The output of the mixer 382 is provided to the bandpass filter 344, which is a filter network producing an output signal at an intermediate frequency (IF). The center frequency of the signal may, for example, be about 25 MHz, and the filter 344 may have a center frequency of about 25 MHz with a bandwidth of about 6 MHz.

The output of the baseband filter 344 may be provided to an amplifier 386 which in turn is coupled to carrier detector circuit 388 and also to a limiter circuit 346. The carrier detector circuit may include a conventional envelope detector 390, such as a diode, the output of which is coupled through a lowpass filter 392 to a comparator 394. The output of the comparator 394 is a two-level signal indicating presence or absence of a carrier.

The limiter circuit 346 may comprise a cascade of one or more limiter modules 396 which may optionally be a.c.-coupled through a capacitor 398 to one another and then coupled to the frequency discriminator circuit 348. Because there is no energy at d.c., there is no need to direct couple to the QPSK demodulator 348. The QPSK demodulator 348 includes, for example, an amplifier 400 coupled to a power splitter 402. The power splitter 402 has an output coupled through a delay circuit 404, which introduces, for example, a 200 nanosecond delay, and another output is provided to a mixer 406. A second input from the mixer 406 is from the delay circuit 404, thereby mixing two signals which in turn produces a product which is provided to a lowpass filter 408. The output of the lowpass filter 408 is provided to an equalizer 410, the output of which is two-level data representing 1 and 0. Data is fed to switch 350 which is activated when the carrier detect signal is logically True from carrier detector 388. The output on the switch 350 is provided to the MLD 352, as explained hereinbelow.

The transmitter section 340 comprises a baseband filter 422 which receives three-level input data from the MLD 352 and provides an output signal to an equalizer 424. The output of the equalizer 424 is fed through attenuator 426 as necessary to provide output level adjustment and thereafter, through a mixer 427 which also received an input from a frequency synthesizer 428 and produces an output at the desired output frequency for the downstream channel 312D (Figure 1) through the amplifier 428 and the diplex filter 332. The modulation provided by the transmitter 340 is a three-level class one partial response encoding scheme AM-PSK modulated onto a carrier, which yields one bit per Hertz spectral efficiency. Class one partial response modulation is a preferred format for simple modulators and demodulators where the signal is operating is a continuous mode. Where the signal is continuous, a received signal can be averaged and used to produce an automatic gain control signal to provide the desired gain. The signal originates as a burst signal at the head end. However, in the MLD 352, the signal is merged with a head-end pseudo signal consisting of a bit stream of 1 0 1 0 1 0 in the preferred implementation. Information from the source of burst signal is merged to provide the desired encoding. Thus, the head end transmitter 340 always generates and transmits a continuous carrier to the downstream channel 312D.

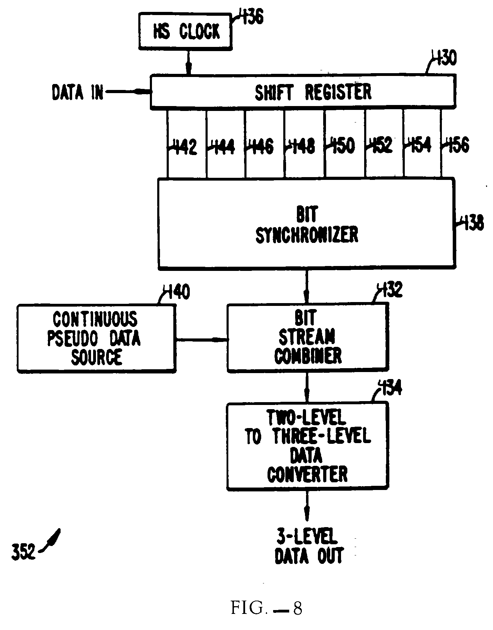

Referring to Figure 8, there is shown a block diagram of one type of maximum likelihood detector (MLD) 352 suitable for use in accordance with the invention. The MLD 352 comprises a shift register 430, a bit stream combiner 432 and a two-level to three-level data converter 434. The shift register 430 has associated therewith a high-speed clock 436 and a bit synchronizer 438. The bit stream combiner 432 has associated therewith a continuous pseudo data source 440, a function of which is to provide a continuous string of pseudo data, for example, 1 0 1 0 1 0 format data in a pseudo-idle state. The bit stream combiner combines data received from the continuous pseudo data source 440 and data received from the shift register 430 into a continuous data stream. The continuous data steam is then provided to the data converter 434 where two level data is converted to three level data. The output of the data converter 434 is coupled to the transmitter 340 of the HRU 314.

The purpose of the MLD 352 is to align data for optimum reception. The various signals received in burst mode through the HRU receiver 336. Each exhibit different phases as a result of differences in distance along the upstream channel 312U from the HRU 314, as well as differences in filter delays and differences in the phase of any local clock. The MLD 352 adjusts for differences in the phase of the input data so that the system clock used in connection with receiving the data in a synchronous format can strobe the received data at or near the midpoint of the bit in the bit stream. To this end, the shift register 430 is clocked by a high speed clock 436 at, for example, eight times the input data rate whereby each input bit is shifted to eight possible positions in turn for output at a selected tap 442, 444, 446, 448, 450, 452, 454 or 456. In the specific embodiment, each tap of the shift register thus presents an output data stream differing in time delay by one eight bit from the adjacent tap. The bit synchronizer 438 monitors each one of the taps and selects by means of appropriate optimization a bit stream from one of the taps, providing as its output a bit stream to the bit stream combiner 432. The bit synchronizer 138 may, for example, include a multiplexer and means for checking each of the input bit streams for errors due to sampling at a less than opimum phase. Should it be deemed unnecessary to adjust the phase automatically, the bit synchronizer may comprise a simple selector switch coupling one selected tap through to the bit stream combiner 432.

MLD 352 operates by having the bit synchronizer 438 examine the data bits as they pass along the shift register 430. The time relationship between the rising edges and the falling edges of the data bits are compared to those of the system clock. Based upon the calculations made by the bit synchronizer 438, the appropriate shift register tap among the eight possible taps 442-456 is used to extract the data and send it to the bit stream combiner 432. This calculation estimates the center of the data bit.

The center of the data bit must be known relative to the system clock. (The system clock is derived from the high speed clock 436 which also runs the shift register 130.) The bit synchronizer 438 examines one of the lines 442-456 and notes when the edges of the data bits occur with respect to each other and with respect to the system clock. The time relationships are measured in terms of the periods of the high speed clock 436. This examination occurs on the first portion of the incoming data stream which has a preamble especially designed to ease the task of the bit synchronizer (usually a 1 0 1 0 1 0 1 0 sequence) and also to allow the synchronization process to occur before the message bits arrive.

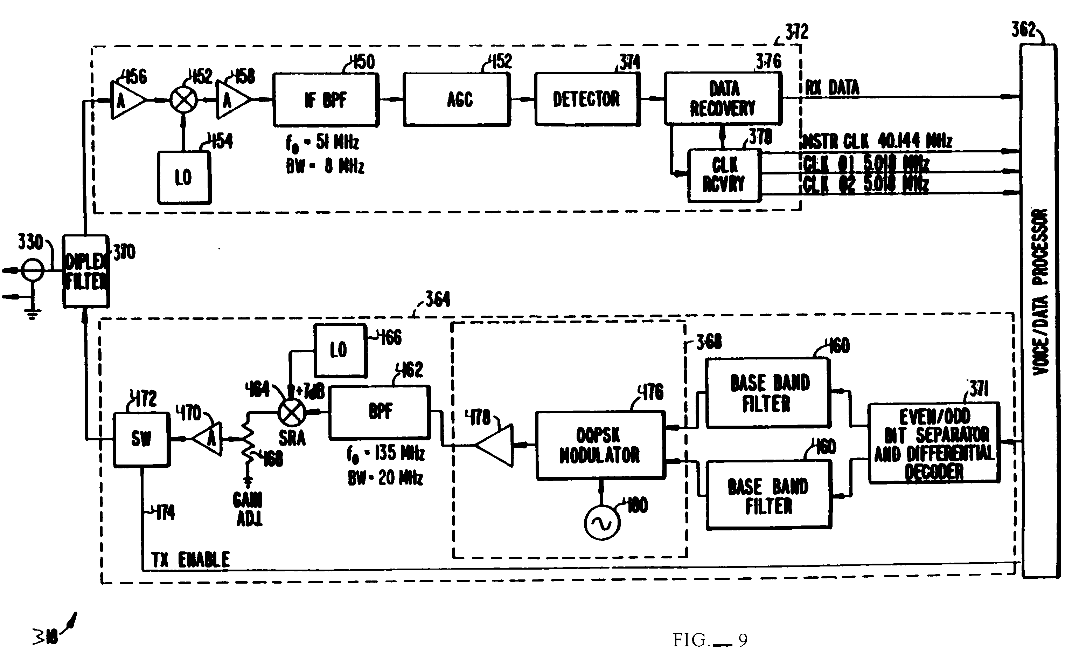

Referring again to Figure 9, the data clock, consisting of two phases CLK phase 1 and CLK phase 2, at the nodes is derived from the bit rate of the continuous downstream bit rate transmitted by the head end 314. Thus, the burst transmissions from the nodes 316, 318 to the head end 314 are at a frequency known to the head end 314 but at an unknown phase. Once the MLD 352 determines the phase, that phase is constant throughout the burst transmission from the node 316 or 318. Therefore, once the MLD 352 ascertains the phase of the preamble it does not make any further adjustments for the remainder of the burst transmission from the node 316 or 318.

The center of the bit times are calculated by taking the bit period, that is, the time between the start and the end of a bit as measured in high speed clock 436 periods, and dividing by two. This measurement can be made by a counter within bit synchronizer 438 which is started when a bit transition occurs and is stopped when the next transition occurs. A similar counting method can be used to determine the time relationship between the bit edges and the master clock edges. The appropriate shift register 430 output 442-456 to take the data from is found from the time relationships between the data edges and the master clock edge. The implementation can be done from a look-up table in a memory within the bit synchronizer 438 or can be calculated in real time with either hardwired logic or a fast dedicated microprocessor.

Within the transmitter 340, the output of the equalizer 424 through the attenuator 426 is provided to a mixer 427, the output of which is coupled to the amplifier 428. The mixer 427 is coupled to a frequency synthesizer 429 which supplies the local oscillator signal used to select the channel for the downstream channel 312D.

Referring now to Figure 9, there is shown a detailed block diagram of the RF section of a node device, for example, node device B 318 in accordance with the invention, having a receiver 372, a diplexer 370 and transmitter 364 and voice/data processor 362. Understanding of the voice/data processor 362 is not necessary to understand the present invention. Its function is to provide transmit data to the transmitter 364, together with any clock signals and control signals, and to receive data from the receiver 372, as well as a master clock signal and other related clock signals.

Referring to the receiver 372, there is shown a simple detector 374 with decoder 376 and clock recovery circuit 378. The circuitry operates at an intermediate frequency, and to this end is provided with an intermediate frequency bandpass filter 450 with a center frequency of 57 MHz and a bandwidth of 6 MHz. It is coupled to receive a signal from a mixer 452 which is coupled to receive a local oscillator signal from a local oscillator 454 and the information-carrying signal through a buffer amplifier 456. The output of the IF bandpass filter 450 is coupled to an automatic gain control circuit 452. The output of the automatic gain control circuit 452 is coupled to the detector 374, which may be a diode type envelope detector. A data recovery circuit 376 is coupled to received the output of the envelope detector 374.

The signal received through the diplex filter 370 is a partial response three level class one signal, which has a desired a one bit per Hertz spectral efficiency. The class 1 partial response format is an ideal format for a simple modulator and demodulator so long as the system is operating in a continuous mode. The operation in a continuous mode allows the incoming signal to produce an AGC signal at the AGC circuit 452 providing compensation for the dynamic range of variations which can be expected at the input. The data recovery circuit is a simple bit synchronous detector which allows recovery of the bit stream in connection with the recovered clock signal from a clock recovery circuit 378. The data recovery circuit may, for example, be a J-K flipflop clocked by a recovered clock signal, where its output is fed to a suitable buffer of the voice/data processor 362. The clock recovery circuit 378, may be a voltage controlled oscillator which is steered or triggered by the edge of the transitions derived from data extracted from the data recovery circuit.

The transmitter 364 comprises a even/odd bit separator and differential encoder 371 coupled through a bandpass filter 460 to a burst modulator 368. The output of the burst modulator 368, which is an analog phase locked loop, is coupled to a bandpass filter 462, the output of which is coupled through a mixer 464 which is coupled to a local oscillator 466. The output of the mixer 464 is provided through a gain adjustment circuit 468 to an output amplifier 470, and the output amplifier 470 is fed through a PIN switch 472 to the diplex filter 370. The PIN switch 472 is controlled by a transmit enable line 474 and is used to gate the signal burst applied through the diplex filter 370 to the tap transmission line 330.

The burst modulator 368 comprises an offset quadrature phase shift keyed (OQPSK) modulator 476 whose data is taken from the two baseband filters 460 and whose carrier is taken from oscillator 480. The QPSK modulator 476 is of a design wherein the carrier signal is split into two components in quadrature phase relation and then provided to mixers which, in turn, are mixed with input data bit streams which are inherently offset by one-half bit period. The resultant mixer outputs are recombined in an output modulated bit stream. The output modulated bit stream from the OQPSK modulator 476 is amplified by amplifier 478 before being sent to the bandpass filter 462.

When there is data being received from the voice/data processor 362, it turns on the switch 472 which allows a signal to be sent to the diplex filter 370. The even/odd bit separator and differential decoder 468 then receives data from the voice/data processor 362 and passes it to the burst transmitter 368 via the identical baseband filters 460. This offset quadrature phase shift keyed signal modulates the burst transmitter 368 between four possible phases. At the end of a data packet, the switch 472 is turned off.

The invention has now been explained with reference to specific embodiments. Other embodiments will be apparent to those of ordinary skill in this art. Therefore, this invention is not to be limited except as indicated by the appended claims.

## Claims

1. A communication system (10,310) comprising:
a head end device (14,314) for receiving bursts of information and for transmitting information;
a first broadband communications medium (12U,312U)
coupled to the head end device; a second broadband communications medium (12D,312D) coupled to the head end device (14,314) and a plurality of node devices (16,18,316,318) each having modulator means (64,364) coupled to the first broadband communications medium (12U,312U) for transmitting signals upstream via the head end device (14,314) and having demodulator means (72,372) coupled to the second broadband communications medium (12D,312D) for receiving signals downstream from the head end device, (14,314) each modulator means (72,372) comprising means for communicating bursts of information, and each demodulator means (72,372) comprising means for receiving information in an AM-PSK format, characterized in that
the bursts of information are in partial response format; the head end device (14,314) is adapted to translate the bursts of information to continuous information in a partial response format and to transmit the continuous information; the means for communicating of each modulator means (72,372) is adapted to communicate the bursts of information in a partial response format with zero energy output for a zero value input; and the means for receiving of each demodulator means (72,372) is adapted to receive continuous information in a partial response format.

2. A communication system (310) comprising:
a head end device (314) for receiving bursts of information and for transmitting information; a first broadband communications medium (312U) coupled to the head end device (314); a second broadband communications medium (312D) coupled to the head end device (314); and a plurality of node devices (316,318) each having modulator means (364) coupled to the first broadband communications medium (132U) for transmitting signals upstream via the head end device (314) and having demodulator means (372) coupled to the second broadband communications medium (312D) for receiving signals downstream from the head end device (314), each modulator means comprising means (376) for communicating bursts of information in a phase shift keyed (PSK) format, and each demodulator means comprising means (376) for receiving information in the PSK format, characterized in that the bursts of information are in a partial response format; the head end device (314) is adapted to translate the bursts of information to continuous information in a partial response format and to transmit the continuous information; the means for communicating of each modulator means (364) is adapted to communicate the bursts of information in an offset quadrature phase shift keyed (OQPSK) format; and the means for receiving of each demodulator means (372) is adapted to receive continuous information in the OQPSK format.

3. A communication system as claimed in claim 1 or 2 wherein the modulator means (68,368) comprises means for transmitting the bursts of information with an efficiency of one bit per Hertz.

4. A communication system as claimed in claim 1, 2 or 3 wherein the head end device (14,314) comprises means for transmitting (40,340) the continuous information with an efficiency of one bit per Hertz.

5. A communication system as claimed in claims 1, 2, 3 and 4 wherein the first broadband communication medium (12U,312U) and the second broadband communication medium (12D,313D) are separate frequency channels on a single physical medium (12,312) and the head end device (14,314) includes a frequency translating means (58,358).

6. A communication system (10) for transmitting information from a source node (16) to a target node (18) comprising: a head end device (14); a unidirectional transmitting medium (12U) coupling each node (16) in a source path to and terminating at the head end device (14); a unidirectional receiving medium (12D) originating from the head end device (14) and coupling to each target node (18); means (64) at the source node (16) for transmitting the information as a signal on a frequency shift keyed (FSK) carrier on the transmitting medium (12U) from the node (16); the head device (14) comprising:
a) head end receiving means (36) for receiving the signal to obtain the received signal, the head end receiving means including:
1) a limiter circuit means (46) for hard limiting the received signal to obtain a limited signal within a dynamic range suitable for discrimination; and
2) a discriminator circuit means (48) for discriminating the limited signal to extract a bit pattern of the information;
b) head end translating means (52) for transferring signals received at the head end device (14) of the transmitting medium (12U) to the receiving medium (12D);
c) means (40) for transmitting a signal on a carrier on the receiving medium (12D) from head end device (14);
d) means (32) for modulating the carrier with the bit pattern of the information when the bit pattern of the information is present; and target node receiving means (72) for receiving the carrier at the target node (18) on the receiving medium, the target node receiving means (72) including:
a) envelope detector means (74) for detecting the modulated carrier; and
b) analog to digital converting means (76) for extracting the bit pattern of said information from said carrier by strobing the bit pattern in synchronism with a system clock, characterized in that the means (64) at the source node (16) for transmitting is adapted to transmit the information as a class four, three-level partial response signal on a three-frequency shift keyed (FSK) carrier; the head device head end receiving means (36) is adapted to receive the class four partial response signal, with a frequency modulation (FM) receiver; the head device means (40) for transmitting is adapted to transmit continuously a class one, three-level partial response signal on a continuous carrier; the head device means (32) for modulating is adapted to modulate the continuous carrier with the bit pattern of the information when the bit pattern of the information is present and to modulate the continuous carrier with a repetitive bit pattern when the bit pattern of the information is not present; the target node receiving means (72) for receiving is adapted to receive the continuous carrier; and the target node receiving means envelope detector means (74) for detecting is adapted to detect the continuous carrier.

7. A communication system (310) for transmitting information from a source node (316) to a target node (318) comprising: a head device (314); a unidirectional transmitting medium (312U) coupling each node (316) in a source path to and terminating at the head end device (314); a unidirectional receiving medium (312D) originating from the head end device (314) and coupling to each target node (318); means (364) at the source node (316) for transmitting the information as a phase keyed (PSK) signal on a carrier on the transmitting medium (312U) from the node (316); the head device (314) comprising: a) head end receiving means (336) for receiving the PSK signal with a PSK receiver to obtain a received signal; and
b) head end translating means (352) for transferring signals received at the head end device (314) of the transmitting medium (312U) to the receiving medium (312D);
c) means (340) for transmitting a signal on a carrier on the receiving medium (312D) from the head end device (314); and
d) means (332) for modulating the carrier with the bit pattern of the information when the bit patter of the information is present; and target node receiving means (372) for receiving the carrier at the target node (318) on the receiving medium (312D), the target node receiving means (372) including
a) envelope detector means (374) for detecting the modulated carrier; and
b) analog to digital converting means (376) for extracting the bit pattern of the information from the carrier by strobing the bit pattern in synchronism with a system clock,
characterized in that the means (364) at the source node (316) for transmitting is adapted to transmit the information as an offset quadrature phase keyed (OQPSK) signal; the head device head end receiving means (336) for receiving is adapted to receive the OQPSK signal with an OQPSK receiver, the head end receiving means (336) including a limiter circuit means (346) for hard limiting the received signal to obtain a limited signal within a defined range; the head device means (340) for transmitting is adapted to transmit continuously a class one, three-level partial response signal on a continuous carrier; the head device means (332) for modulating is adapted to modulate the continuous carrier with the bit pattern of the information when the bit pattern of the information is present and to modulate the continuous carrier with a repetitive bit pattern when the bit pattern of the information is not present; and the target node receiving means (372) for receiving is adapted to receive the continuous carrier; and the target node receiving means envelope detector means (374) for detecting is adapted to detect the continuous carrier.

8. A communication system as claimed in claim 6 or 7 comprising means (62;362) coupled to the first node (16;316) for digitizing a voice signal to produce the information.

9. A communication system as claimed in claim 6, 7 or 8 wherein the transmitting medium (12;312U) and the receiving medium (12D;312D) are separate frequency channels on a single physical medium (12;312) and the transmitting means .(40;340) includes a frequency translator (58;358).

10. A communication system as claimed in claim 9 comprising a plurality of transmitting and receiving channels (12U,12D;312U,312D) on the physical medium (12;312), each of the nodes (16,18;316,318) having means for transmitting and receiving on more than one channel.

11. A communication system as claimed in any preceding claim wherein the head end device (14,314) comprises means (52;158;352;438) for aligning in time the bit pattern of the information to synchronize the bit pattern of the information with the repetitive bit pattern in order to allow extraction of bits at an optimised time.

12. A method of transmitting information from a source node (16) to a target node (18) in a communication system (10) having a unidirectional transmitting medium (12U) terminating at a head end (14) and translated at said head end (14) onto a unidirectional receiving medium (12D) originating from said head end (14), the method comprising the steps of: transmitting said information as a signal on a frequency shift-keyed (FSK) carrier on said transmitting medium (12U) from said source node (16); receiving said signal at said head end to obtain a received signal, characterized in that said step of transmitting further comprises transmitting said information as a class four, three-level partial response signal on a three-frequency shift-keyed (FSK) carrier; said step of receiving further comprises receiving said class four partial response signal with a frequency modulation (FM) receiver; and after said step of receiving, the following steps are performed: hard limiting said received signal with a limiter circuit means (46) to obtain a limited signal within a dynamic range suitable for discrimination; discriminating said limited signal with a discriminator circuit means (48) to extract a bit pattern of said information; transmitting continuously a class one, three-level partial response signal on a continuous carrier on said receiving medium (12D) from said head end (14); modulating said continuous carrier with said bit pattern of said information when said bit pattern of said information is present and modulating said continuous carrier with a repetitive bit pattern when said bit pattern of said information is not present; receiving said continuous carrier at said target node (18) on said receiving medium (12D); detecting said modulated continuous carrier with an envelope detector means (74); and extracting said bit pattern of said information from said modulated continuous carrier by strobing said bit pattern in synchronism with a system clock (136).

13. A method of transmitting information from a source node (316) to a target node (318) in a communication system (310) having a unidirectional transmitting medium (312U) terminating at a head end (314) and translated at said head end onto a unidirectional receiving medium (312D) originating from said head end (314), the method comprising the steps of: transmitting said information as a phase shift keyed (PSK) signal on a carrier on said transmitting medium from said source node; receiving said PSK signal at said head end (314) to obtain a received signal, characterized in that said step of transmitting further comprises transmitting said information as an offset quadrature phase shift keyed (OQPSK) signal; said step of receiving further comprises receiving said OQPSK signal with an OQPSK receiver (336); and after said step of receiving, the following steps are performed: hard limiting said received signal with a limiter circuit (346) means to obtain a limited signal within a defined dynamic range; transmitting continuously a class one, three-level partial response signal on a continuous carrier on said receiving medium (312D) from said head end (314); modulating said continuous carrier with said bit pattern of said information when said bit pattern of said information is present and modulating said continuous carrier with a repetitive bit pattern when said bit pattern of said information is not present; receiving said continuous carrier at said target node (318) on said receiving medium; detecting said modulated continuous carrier with an envelope detector means (374); and extracting said bit pattern of said information from said modulated continuous carrier by strobing said bit pattern in synchronism with a system clock.

14. A method as claimed in claim 12 or 13 comprising the step of aligning in time the bit pattern of the information at the head end (14;314) to synchronize the bit pattern of the information with the repetitive bit pattern in order to allow extraction of bits at an optimised time.

15. A method as claimed in claim 12, 13 or 14 comprising the step of digitizing a voice signal to produce the information.

16. A method as claimed in 12, 13, 14 or 15 wherein the signal transmitting step includes asynchronously transmitting the information in bursts.

## Patentansprüche

1. Übertragungssystem (10, 310), umfassend:
eine Kopfstellenvorrichtung (14, 314) zum Empfangen von Bündeln von Informationen und zum Senden von Informationen;
ein erstes Breitband-Übertragungsmedium (12U, 312U), das mit der Kopfstellenvorrichtung gekoppelt ist; ein zweites Breitband-Übertragungsmedium (12D, 312D), das mit der Kopfstellenvorrichtung (14, 314) gekoppelt ist, sowie eine Mehrzahl von Knotenvorrichtungen (16, 18, 316, 318) jeweils mit einem Modulator (64, 364), der mit dem ersten Breitband-Übertragungsmedium (12U, 312U) gekoppelt ist, um Signale im Upstream über die Kopfstellenvorrichtung (14, 314) zu senden, und mit einem Demodulator (72, 372), der mit dem zweiten Breitband-Übertragungsmedium (12D, 312D) gekoppelt ist, um Signale im Downstream von der Kopfstellenvorrichtung (14, 314) zu empfangen, wobei jeder Modulator (72, 372) ein Mittel zum Übertragen von Bündeln von Informationen aufweist und wobei jeder Demodulator (72, 372) ein Mittel zum Empfangen von Informationen in einem AM-PSK-Format aufweist, dadurch gekennzeichnet, daß
die Bündel von Informationen im Partial-Response-Format sind; die Kopfstellenvorrichtung (14, 314) die Informationsbündel in kontinuierliche Informationen in einem Partial-Response-Format umsetzen und die kontinuierlichen Informationen senden kann; das Mittel zum Übertragen jedes Modulators (72, 372) die Informationsbündel in einem Partial-Response-Format mit Null-Energie-Ausgang für einen Null-Wert-Eingang übertragen kann; und das Mittel zum Empfangen jedes Demodulators (72, 372) kontinuierliche Informationen in einem Partial-Response-Format empfangen kann.

2. Übertragungssystem (310), umfassend:
eine Kopfstellenvorrichtung (314) zum Empfangen von Bündeln von Informationen und zum Senden von Informationen; ein erstes Breitband-Übertragungsmedium (312U), das mit der Kopfstellenvorrichtung (314) gekoppelt ist; ein zweites Breitband-Übertragungsmedium (312D), das mit der Kopfstellenvorrichtung (314) gekoppelt ist; und eine Mehrzahl von Knotenvorrichtungen (316, 318) jeweils mit einem Modulator (364), der mit dem ersten Breitband-Übertragungsmedium (132U) gekoppelt ist, um Signale im Upstream über die Kopfstellenvorrichtung (314) zu senden, und jeweils mit einem Demodulator (372), der mit dem zweiten Breitband-Übertragungsmedium (312D) gekoppelt ist, um Signale im Downstream von der Kopfstellenvorrichtung (314) zu empfangen, wobei jeder Modulator ein Mittel (376) zum Übertragen von Bündeln von Informationen in einem Phasenumtastungsformat (PSK) aufweist und jeder Demodulator ein Mittel (376) zum Empfangen von Informationen im PSK-Format aufweist, dadurch gekennzeichnet, daß die Bündel von Informationen in einem Partial-Response-Format sind; die Kopfstellenvorrichtung (314) die Informationsbündel in kontinuierliche Informationen in einem Partial-Response-Format umsetzen und die kontinuierlichen Informationen senden kann; das Mittel zum Übertragen jedes Modulators (364) die Informationsbündel in einem O-4PSK-Format übertragen kann; und das Mittel zum Empfangen jedes Demodulators (372) kontinuierliche Informationen im O-4PSK- Format empfangen kann.

3. Übertragungssystem nach Anspruch 1 oder 2, wobei der Modulator (68, 368) ein Mittel zum Senden der Informationsbündel mit einer Leistung von einem Bit pro Hertz umfaßt.

4. Übertragungssystem nach Anspruch 1, 2 oder 3, wobei die Kopfstellenvorrichtung (14, 314) ein Mittel zum Senden (40, 340) der kontinuierlichen Informationen mit einer Leistung von einem Bit pro Hertz aufweist.

5. Übertragungssystem nach Anspruch 1, 2, 3 und 4, wobei das erste Breitband-Übertragungsmedium (12U, 312U) und das zweite Breitband-Übertragungsmedium (12D, 312D) separate Frequenzkanäle auf einem einzigen physikalischen Medium (12, 312) sind und die Kopfstellenvorrichtung (14, 314) ein Frequenzumsetzungsmittel (58, 358) aufweist.

6. Übertragungssystem (10) zum Senden von Informationen von einem Quellenknoten (16) zu einem Zielknoten (18), umfassend: eine Kopfstellenvorrichtung (14) ; ein unidirektionales Sendemedium (12U), das jeden Knoten (16) in einem Quellenpfad mit der Kopfstellenvorrichtung (14) koppelt und das dort endet; ein unidirektionales Empfangsmedium (12D), das von der Kopfstellenvorrichtung (14) stammt und mit jedem Zielknoten (18) gekoppelt ist; ein Mittel (64) an dem Quellenknoten (16) zum Senden der Informationen als ein Signal auf einem Frequenzumtastungsträger (FSK) auf dem Sendemedium (12U) von dem Knoten (16); wobei die Kopfstellenvorrichtung (14) folgendes umfaßt:
a) ein Kopfstellen-Empfangsmittel (36) zum Empfangen des Signals zwecks Erhalts des empfangenen Signals, wobei das Kopfstellen-Empfangsmittel folgendes umfaßt:
1) eine Begrenzerschaltung (46) zum harten Begrenzen des empfangenen Signals zwecks Erhalts eines begrenzten Signals innerhalb eines zur Diskrimination geeigneten dynamischen Bereiches; und
2) eine Diskriminatorschaltung (48) zur Diskrimination des begrenzten Signals, um ein Bitmuster der Informationen zu extrahieren;
b) ein Kopfstellen-Umsetzungsmittel (52), um an der Kopfstellenvorrichtung (14) des Sendemediums (12U) empfangene Signale zu dem Empfangsmedium (12D) zu übertragen;
c) ein Mittel (40) zum Senden eines Signals auf einem Träger auf dem Empfangsmedium (12D) von der Kopfstellenvorrichtung (14);
d) ein Mittel (32) zum Modulieren des Trägers mit dem Bitmuster der Informationen, wenn das Bitmuster der Informationen vorhanden ist; und ein Zielknoten-Empfangsmittel (72) zum Empfangen des Trägers am Zielknoten (18) auf dem Empfangsmedium, wobei das Zielknoten-Empfangsmittel (72) folgendes umfaßt:
a) einen Hüllkurvendetektor (74) zum Erfassen des modulierten Trägers; und
b) einen A/D-Wandler (76) zum Extrahieren des Bitmusters der genannten Informationen aus dem genannten Träger durch Freigeben des Bitmusters synchron zum Systemtakt, dadurch gekennzeichnet, daß das Sendemittel (64) am Quellenknoten (16) die Informationen als dreistufiges Partial-Response-Signal der Klasse vier auf einem Dreifrequenzumtastungsträger (FSK) senden kann; das Kopfvorrichtungs-Kopfstellen-Empfangsmittel (36) das Partial-Response-Signal der Klasse vier mit einem Frequenzmodulationsempfänger (FM) empfangen kann; das Kopfvorrichtungssendemittel (40) kontinuierlich ein dreistufiges Partial-Response-Signal der Klasse eins auf einem kontinuierlichen Träger senden kann; das Kopfvorrichtungsmodulationsmittel (32) den kontinuierlichen Träger mit dem Bitmuster der Informationen modulieren kann, wenn das Bitmuster der Informationen vorhanden ist, und den kontinuierlichen Träger mit einem sich wiederholenden Bitmuster modulieren kann, wenn das Bitmuster der Informationen nicht vorhanden ist; das Zielknoten-Empfangsmittel (72) den kontinuierlichen Träger empfangen kann; und der Zielknoten-Empfangsmittel-Hüllkurvendetektor (74) den kontinuierlichen Träger erfassen kann.

7. Übertragungssystem (310) zum Senden von Informationen von einem Quellenknoten (316) zu einem Zielknoten (318), umfassend: eine Kopfstellenvorrichtung (314); ein unidirektionales Sendemedium (312U), das jeden Knoten (316) in einem Quellenpfad mit der Kopfstellenvorrichtung (314) koppelt und das dort endet; ein unidirektionales Empfangsmedium (312D), das von der Kopfstellenvorrichtung (314) stammt und mit jedem Zielknoten (318) gekoppelt ist; ein Mittel (364) an dem Quellenknoten (316) zum Senden der Informationen als ein Phasenumtastungssignal (FSK) auf einem Träger auf dem Sendemedium (312U) von dem Knoten (316); wobei die Kopfstellenvorrichtung (314) folgendes umfaßt:
a) ein Kopfstellen-Empfangsmittel (336) zum Empfangen des PSK-Signals mit einem PSK-Empfänger zwecks Erhalts des empfangenen Signals; und
b) ein Kopfstellen-Umsetzungsmittel (352), um an der Kopfstellenvorrichtung (314) des Sendemediums (312U) empfangene Signale zu dem Empfangsmedium (312D) zu übertragen;
c) ein Mittel (340) zum Senden eines Signals auf einem Träger auf dem Empfangsmedium (312D) von der Kopfstellenvorrichtung (314); und
d) ein Mittel (332) zum Modulieren des Trägers mit dem Bitmuster der Informationen, wenn das Bitmuster der Informationen vorhanden ist; und ein Zielknoten-Empfangsmittel (372) zum Empfangen des Trägers am Zielknoten (318) auf dem Empfangsmedium (312D), wobei das Zielknoten-Empfangsmittel (372) folgendes umfaßt:
a) einen Hüllkurvendetektor (374) zum Erfassen des modulierten Trägers; und
b) einen A/D-Wandler (376) zum Extrahieren des Bitmusters der genannten Informationen aus dem genannten Träger durch Freigeben des Bitmusters synchron zum Systemtakt,
dadurch gekennzeichnet, daß das Sendemittel (364) am Quellenknoten (316) die Informationen als ein O-4PSK-Signal senden kann; das Kopfvorrichtungs-Kopfstellen-Empfangsmittel (336) das O-4PSK-Signal mit einem O-4PSK- Empfänger empfangen kann, wobei das Kopfstellen-Empfangsmittel (336) eine Begrenzerschaltung (346) zum harten Begrenzen des empfangenen Signals zwecks Erhalts eines begrenzten Signals innerhalb eines definierten Bereiches aufweist; das Kopfvorrichtungssendemittel (340) kontinuierlich ein dreistufiges Partial-Response-Signal der Klasse eins auf einem kontinuierlichen Träger senden kann; das Kopfvorrichtungsmodulationsmittel (332) den kontinuierlichen Träger mit dem Bitmuster der Informationen modulieren kann, wenn das Bitmuster der Informationen vorhanden ist, und den kontinuierlichen Träger mit einem sich wiederholenden Bitmuster modulieren kann, wenn das Bitmuster der Informationen nicht vorhanden ist; und das Zielknoten-Empfangsmittel (372) den kontinuierlichen Träger empfangen kann; und der Zielknotenempfangsmittel-Hüllkurvendetektor (374) den kontinuierlichen Träger erfassen kann.

8. Übertragungssystem nach Anspruch 6 oder 7, umfassend ein Mittel (62; 362), das mit dem ersten Knoten (16; 316) gekoppelt ist, um ein Sprachsignal zwecks Erzeugung der Informationen zu digitalisieren.

9. Übertragungssystem nach Anspruch 6, 7 oder 8, wobei das Sendemedium (12; 312U) und das Empfangsmedium (12D; 312D) separate Frequenzkanäle auf einem einzelnen physikalischen Medium (12; 312) sind und das Empfangsmittel (40; 340) einen Frequenzumsetzer (58; 358) aufweist.

10. Übertragungssystem nach Anspruch 9, umfassend eine Mehrzahl von Sende- und Empfangskanälen (12U, 12D; 312U, 312D) auf dem physikalischen Medium (12; 312), wobei jeder der Knoten (16, 18; 316, 318) ein Mittel zum Senden und Empfangen von mehr als einem Kanal aufweist.

11. Übertragungssystem nach einem der vorhergehenden Ansprüche, wobei die Kopfstellenvorrichtung (14, 314) ein Mittel (52; 158; 352; 438) zum zeitlichen Ausrichten des Bitmusters der Informationen umfaßt, um das Bitmuster der Informationen mit dem sich wiederholenden Bitmuster zu synchronisieren, damit Bits an einem optimierten Zeitpunkt extrahiert werden können.

12. Verfahren zum Senden von Informationen von einem Quellenknoten (16) zu einem Zielknoten (18) in einem Übertragungssystem (10) mit einem unidirektionalen Sendemedium (12U), das an einer Kopfstelle (14) endet und das an der genannten Kopfstelle (14) auf ein unidirektionales Empfangsmedium (12D) umgesetzt wird, das von der genannten Kopfstelle (14) stammt, wobei das Verfahren die folgenden Schritte umfaßt: Senden der genannten Informationen als ein Signal auf einem Frequenzumtastungsträger (FSK) auf dem genannten Sendemedium (12U) von dem genannten Quellenknoten (16); Empfangen des genannten Signals an der genannten Kopfstelle zwecks Erhalts eines empfangenen Signals, dadurch gekennzeichnet, daß der genannte Schritt des Sendens außerdem das Senden der genannten Informationen als ein dreistufiges Partial-Response-Signal der Klasse vier auf einem Dreifrequenzumtastungsträger (FSK) umfaßt; wobei der genannte Schritt des Empfangens außerdem das Empfangen des genannten Partial-Response-Signals der Klasse vier mit einem Frequenzmodulationsempfänger (FM) umfaßt; und wobei nach dem genannten Schritt des Empfangens die folgenden Schritte durchgeführt werden: hartes Begrenzen des genannten empfangenen Signals mit einer Begrenzerschaltung (46) zwecks Erhalts eines begrenzten Signals innerhalb eines zur Diskrimination geeigneten dynamischen Bereiches; Diskriminieren des genannten begrenzten Signals mit einer Diskriminatorschaltung (48) zum Extrahieren eines Bitmusters der genannten Informationen; kontinuierliches Senden eines dreistufigen Partial-Response-Signals der Klasse eins auf einem kontinuierlichen Träger auf dem genannten Empfangsmedium (12D) von der genannten Kopfstelle (14); Modulieren des genannten kontinuierlichen Trägers mit dem genannten Bitmuster der genannten Informationen, wenn das genannte Bitmuster der genannten Informationen vorhanden ist, und Modulieren des genannten kontinuierlichen Trägers mit einem sich wiederholenden Bitmuster, wenn das genannte Bitmuster der genannten Informationen nicht vorhanden ist; Empfangen des genannten kontinuierlichen Trägers an dem genannten Zielknoten (18) auf dem genannten Empfangsmedium (12D); Erfassen des genannten modulierten kontinuierlichen Trägers mit einem Hüllkurvendetektor (74); und Extrahieren des genannten Bitmusters der genannten Informationen aus dem genannten modulierten kontinuierlichen Träger durch Freigeben des genannten Bitmusters synchron mit einem Systemtakt (136).

13. Verfahren zum Senden von Informationen von einem Quellenknoten (316) zu einem Zielknoten (318) in einem Übertragungssystem (310) mit einem unidirektionalen Sendemedium (312U), das an einer Kopfstelle (314) endet und das an der genannten Kopfstelle (314) auf ein unidirektionales Empfangsmedium (312D) umgesetzt wird, das von der genannten Kopfstelle (314) stammt, wobei das Verfahren die folgenden Schritte umfaßt: Senden der genannten Informationen als ein Phasenumtastungssignal (PSK) auf einem Träger auf dem genannten Sendemedium von dem genannten Quellenknoten; Empfangen des genannten PSK-Signals an der genannten Kopfstelle (314) zwecks Erhalts eines empfangenen Signals, dadurch gekennzeichnet, daß der genannte Schritt des Sendens außerdem das Senden der genannten Informationen als ein O-4PSK-Signal umfaßt; wobei der genannte Schritt des Empfangens außerdem das Empfangen des genannten O-4PSK-Signals mit einem O-4PSK-Empfänger (336) umfaßt; und wobei nach dem genannten Schritt des Empfangens die folgenden Schritte durchgeführt werden: hartes Begrenzen des genannten empfangenen Signals mit einer Begrenzerschaltung (346) zwecks Erhalts eines begrenzten Signals innerhalb eines definierten dynamischen Bereiches; kontinuierliches Senden eines dreistufigen Partial-Response-Signals der Klasse eins auf einem kontinuierlichen Träger auf dem genannten Empfangsmedium (312D) von der genannten Kopfstelle (314); Modulieren des genannten kontinuierlichen Trägers mit dem genannten Bitmuster der genannten Informationen, wenn das genannte Bitmuster der genannten Informationen vorhanden ist, und Modulieren des genannten kontinuierlichen Trägers mit einem sich wiederholenden Bitmuster, wenn das genannte Bitmuster der genannten Informationen nicht vorhanden ist; Empfangen des genannten kontinuierlichen Trägers an dem genannten Zielknoten (318) auf dem genannten Empfangsmedium; Erfassen des genannten modulierten kontinuierlichen Trägers mit einem Hüllkurvendetektor (374) ; und Extrahieren des genannten Bitmusters der genannten Informationen aus dem genannten modulierten kontinuierlichen Träger durch Freigeben des genannten Bitmusters synchron mit einem Systemtakt.

14. Verfahren nach Anspruch 12 oder 13, umfassend den Schritt des zeitmäßigen Ausrichtens des Bitmusters der Informationen an der Kopfstelle (14; 314), um das Bitmuster der Informationen mit dem sich wiederholenden Bitmuster zu synchronisieren, so daß Bits an einem optimierten Zeitpunkt extrahiert werden können.

15. Verfahren nach Anspruch 12, 13 oder 14, umfassend den Schritt des Digitalisierens eines Sprachsignals zur Erzeugung der Informationen.

16. Verfahren nach Anspruch 12, 13, 14 oder 15, wobei der Signalsendeschritt das asynchrone Senden der Informationen in Bündeln beinhaltet.

## Revendications

1. Système de communication (10,310) comprenant:
un dispositif de tête de réseau (14,314) pour recevoir des salves d'informations et pour transmettre des informations ; un premier support de communications à large bande (12U,312U) couplé au dispositif de tête de réseau ; un deuxième support de communications à large bande (12D,312D) couplé au dispositif de tête de réseau (14,314) et une pluralité de dispositifs de noeuds (16,18,316,318) ayant chacun un moyen de modulateur (64,364) couplé au premier support de communications à large bande (12U,312U) pour transmettre des signaux en amont par l'intermédiaire du dispositif de tête de réseau (14,314) et ayant un moyen de démodulateur (72,372) couplé au deuxième support de communications à large bande (12D,312D) pour recevoir des signaux en aval à partir du dispositif de tête de réseau, (14,314) chaque moyen de modulateur (72,372) comprenant un moyen de communication de salves d'informations, et chaque moyen de démodulateur (72,372) comprenant un moyen de réception des informations dans un format AM-PSK, caractérisé en ce que
les salves d'informations sont en un format de réponse partielle ; le dispositif de tête de réseau (14,314) est adapté pour transposer les salves d'informations en informations continues dans un format de réponse partielle et pour transmettre les informations continues ; le moyen de communication de chaque moyen de modulateur (72,372) est adapté pour communiquer les salves d'informations dans un format de réponse partielle avec une sortie d'énergie nulle pour une entrée de valeur nulle ; et le moyen de réception de chaque moyen de démodulateur (72,372) est adapté pour recevoir des informations continues dans un format de réponse partielle.

2. Système de communications (310) comprenant :
un dispositif de tête de réseau (314) pour recevoir des salves d'informations et pour transmettre des informations ; un premier support de communications à large bande (312U) couplé au dispositif de tête de réseau (314) ; un deuxième support de communications à large bande (312D) couplé au dispositif de tête de réseau (314) ; et une pluralité de dispositifs de noeuds (316,318) ayant chacun un moyen de modulateur (364) couplé au premier support de communications à large bande (312U) pour transmettre des signaux en amont par l'intermédiaire du dispositif de tête de réseau (314) et ayant un moyen de démodulateur (372) couplé au deuxième support de communications à large bande (312D) pour recevoir des signaux en aval à partir du dispositif de tête de réseau (314), chaque moyen de modulateur comprenant un moyen (376) de communication de salves d'informations dans un format modulé par déplacement de phase (PSK), et chaque moyen de démodulateur comprenant un moyen (376) de réception d'informations dans un format PSK, caractérisé en ce que les salves d'informations sont dans un format de réponse partielle ; le dispositif de tête de réseau (314) est adapté pour transposer les salves d'informations en informations continues dans un format de réponse partielle et pour transmettre les informations continues ; le moyen de communication de chaque moyen de modulateur (364) est adapté pour communiquer les salves d'informations dans un format de modulation par déplacement de phase à quatre états décalé (OQPSK) ; et le moyen de réception de chaque moyen de démodulateur (372) est adapté pour recevoir des informations continues dans le format OQPSK.

3. Système de communications tel que revendiqué à la revendication 1 ou 2, dans lequel le moyen de modulateur (68,368) comprend un moyen de transmission des salves d'informations avec un rendement d'un bit par Hertz.

4. Système de communications tel que revendiqué à la revendication 1, 2 ou 3, dans lequel le dispositif de tête de réseau (14,314) comprend un moyen de transmission (40,340) des informations continues avec un rendement d'un bit par Hertz.

5. Système de communications tel que revendiqué dans les revendications 1, 2, 3 et 4, dans lequel le premier support de communications à large bande (12U,312U) et le deuxième support de communications à large bande (12D,312D) sont des voies de fréquence distinctes sur un même support physique (12,312) et le dispositif de tête de réseau (14,314) comporte un moyen de transposition en fréquence (58,358).

6. Système de communications (10) pour transmettre des informations à partir d'un noeud source (16) vers un noeud cible (18) comprenant : un dispositif de tête de réseau (14) ; un support de transmission unidirectionnel (12U) couplant chaque noeud (16) dans un chemin source vers et se terminant au niveau du dispositif de tête de réseau (14) ; un support de réception unidirectionnel (12D) commençant à partir du dispositif de tête de réseau (14) et se couplant à chaque noeud cible (18) ; un moyen (64) au niveau du noeud source (16) pour transmettre des informations sous forme de signal sur une porteuse modulée par déplacement de fréquence (FSK) sur le support de transmission (12U) à partir du noeud (16) ; le dispositif de tête (14) comprenant :
a) un moyen de réception de tète de réseau (36) pour recevoir le signal pour obtenir le signal reçu, le moyen de réception de tête de réseau comportant :
1) un moyen de circuit limiteur (46) pour une limite stricte du signal reçu pour obtenir un signal limité à l'intérieur d'une plage dynamique convenant à la discrimination ; et
2) un moyen de circuit discriminateur (48) pour discriminer le signal limité pour extraire une configuration binaire des informations ;
b) un moyen de transposition de tête de réseau (52) pour transposer les signaux reçus au niveau du dispositif de tête de réseau (14) du support de transmission (12U) au support de réception (12D) ;
c) un moyen (40) de transmission d'un signal sur une porteuse sur le support de réception (12D) à partir du dispositif de tête de réseau (14) ;
d) un moyen (32) de modulation de la porteuse avec la configuration binaire des informations quand la configuration binaire des informations est présente ; et un moyen de réception de noeud cible (72) pour recevoir la porteuse au niveau du noeud cible (18) sur le support de réception, le moyen de réception de noeud cible (72) comportant
a) un moyen détecteur d'enveloppe (74) pour détecter la porteuse modulée ; et
b) un moyen de conversion analogique/numérique (76) pour extraire la configuration binaire desdites informations à partir de ladite porteuse en échantillonnant la configuration binaire en synchronisation avec une horloge de système, caractérisé en ce que le moyen de transmission (64) au niveau du noeud source (16) est adapté pour transmettre les informations sous forme de signal de réponse partielle de classe quatre à trois niveaux sur une porteuse modulée par déplacement de trois fréquences (FSK) ; le moyen de réception de tête de réseau de dispositif de tête (36) est adapté pour recevoir le signal de réponse partielle de classe quatre, avec un récepteur à modulation de fréquence (FM) ; le moyen de transmission de dispositif de tête de réseau (40) est adapté pour transmettre en continu un signal de réponse partielle de classe un de trois niveaux sur une porteuse continue ; le moyen de modulation de dispositif de tête de réseau (32) est adapté pour moduler la porteuse continue avec la configuration binaire des informations quand la configuration binaire est présente et pour moduler la porteuse continue avec une configuration binaire répétitive quand la configuration binaire des informations n'est pas présente ; le moyen de réception de noeud cible (72) est adapté pour recevoir la porteuse continue ; et le moyen de détecteur d'enveloppe de moyen de réception de noeud cible (74) est adapté pour détecter la porteuse continue.

7. Système de communications (310) pour transmettre des informations à partir d'un noeud source (316) vers un noeud cible (318) comprenant: un dispositif de tête de réseau (314) ; un support de transmission unidirectionnel (312U) couplant chaque noeud (316) dans un chemin source vers et se terminant au niveau du dispositif de tête de réseau (314) ; un support de réception unidirectionnel (312D) commençant à partir du dispositif de tête de réseau (314) et se couplant à chaque noeud cible (318) ; un moyen (364) au niveau du noeud source (316) pour transmettre les informations sous forme de signal modulé en phase (PSK) sur une porteuse sur le support de transmission (312U) à partir du noeud (316) ; le dispositif de tête (314) comprenant :
a) un moyen de réception de tête de réseau (336) pour recevoir le signal PSK avec un récepteur PSK pour obtenir un signal reçu ; et
b) un moyen de transposition de tête de réseau (352) pour transposer les signaux reçus au niveau du dispositif de tête de réseau (314) du support de transmission (312U) au support de réception (312D) ;
c) un moyen (340) de transmission d'un signal sur une porteuse sur le support de réception (312D) à partir du dispositif de tête de réseau (314); et
d) un moyen (332) de modulation de la porteuse avec la configuration binaire des informations quand la configuration binaire des informations est présente ; et un moyen de réception de noeud cible (372) pour recevoir la porteuse au niveau du noeud cible (318) sur le support de réception (312D), le moyen de réception de noeud cible (372) comportant
a) un moyen détecteur d'enveloppe (374) pour détecter la porteuse modulée ; et
b) un moyen de conversion analogique/numérique (376) pour extraire la configuration binaire desdites informations à partir de ladite porteuse en échantillonnant la configuration binaire en synchronisation avec une horloge de système, caractérisé en ce que le moyen de transmission (364) au niveau du noeud source (316) est adapté pour transmettre les informations sous forme de signal modulé par déplacement de phase à quatre états décalé (OQPSK) ; le moyen de réception de tête de réseau de dispositif de tête (336) est adapté pour recevoir le signal OQPSK avec un récepteur OQPSK, le moyen de réception de tête de réseau (336) comportant un moyen de circuit limiteur (346) pour une limite stricte du signal reçu pour obtenir un signal limité à l'intérieur d'une plage définie ; le moyen de transmission de dispositif de tête de réseau (340) est adapté pour transmettre en continu un signal de réponse partielle de classe un de trois niveaux sur une porteuse continue ; le moyen de modulation de dispositif de tête de réseau (332) est adapté pour moduler la porteuse continue avec la configuration binaire des informations quand la configuration binaire des informations est présente et pour moduler la porteuse continue avec une configuration binaire répétitive quand la configuration binaire des informations n'est pas présente ; et le moyen de réception de noeud cible (372) est adapté pour recevoir la porteuse continue ; et le moyen de détecteur d'enveloppe de moyen de réception de noeud cible (374) est adapté pour détecter la porteuse continue.

8. Système de communications tel que revendiqué à la revendication 6 ou 7, comprenant un moyen (62; 362) couplé au premier noeud (16 ; 316) pour numériser un signal vocal pour produire les informations.

9. Système de communications tel que revendiqué à la revendication 6, 7 ou 8, dans lequel le support de transmission (12 ; 312U) et le support de réception (12D ; 312D) sont des voies de fréquence distinctes sur un même support physique (12 ; 312) et le moyen de transmission (40 ; 340) comporte un traducteur de fréquence (58 ; 358).

10. Système de communications tel que revendiqué à la revendication 9, comprenant une pluralité de voies de transmission et de réception (12U,12D ; 312U,312D) sur le support physique (12 ; 312), chacun des noeuds (16,18 ; 316,318) ayant un moyen de transmission et de réception sur plus d'une voie.

11. Système de communications tel que revendiqué dans l'une quelconque des revendications précédentes, dans lequel le dispositif de tête de réseau (14,314) comprend un moyen (52 ; 158 ; 352 ; 438) pour aligner dans le temps la configuration binaire des informations de manière à synchroniser la configuration binaire des informations avec la configuration binaire répétitive afin de permettre l'extraction de bits à un moment optimisé.

12. Méthode de transmission d'informations à partir d'un noeud source (16) vers un noeud cible (18) dans un système de communications (10) ayant un support de transmission unidirectionnel (12U) se terminant au niveau d'une tête de réseau (14) et transposées au niveau de ladite tête de réseau (14) sur un support de réception unidirectionnel (12D) commençant au niveau de ladite tête de réseau (14), la méthode comprenant les opérations de : transmission desdites informations sous forme de signal sur une porteuse modulée par déplacement de fréquence (FSK) sur ledit support de transmission (12U) à partir dudit noeud source (16) ; réception dudit signal au niveau de ladite tête de réseau pour obtenir un signal reçu, caractérisée en ce que ladite opération de transmission comprend en outre la transmission desdites informations sous forme de signal de réponse partielle de classe quatre de trois niveaux sur une porteuse modulée par déplacement de trois fréquences (FSK), ladite opération de réception comprend en outre la réception dudit signal de réponse partielle de classe quatre avec un récepteur à modulation de fréquence (FM) ; et après ladite opération de réception, les opérations suivantes sont effectuées : limite stricte dudit signal reçu avec un moyen de circuit limiteur (46) pour obtenir un signal limité à l'intérieur d'une plage dynamique convenant à la discrimination ; discrimination dudit signal limité avec un moyen de circuit discriminateur (48) pour extraire une configuration binaire des informations ; transmission continue d'un signal de réponse partielle de classe une de trois niveaux sur une porteuse continue sur ledit support de réception (12D) à partir de ladite tête de réseau (14) ; modulation de ladite porteuse continue avec ladite configuration binaire desdites informations quand ladite configuration binaire desdites informations est présente et modulation de ladite porteuse continue avec une configuration binaire répétitive quand ladite configuration binaire desdites informations n'est pas présente ; réception de ladite porteuse continue au niveau dudit noeud cible (18) sur ledit support de réception (12D) ; détection de ladite porteuse continue modulée avec un moyen détecteur d'enveloppe (74) ; et extraction de ladite configuration binaire desdites informations à partir de ladite porteuse continue modulée en échantillonnant ladite configuration binaire en synchronisation avec une horloge de système (136).

13. Méthode de transmission d'informations à partir d'un noeud source (316) vers un noeud cible (318) dans un système de communications (310) ayant un support de transmission unidirectionnel (312U) se terminant au niveau d'une tête de réseau (314) et transposées au niveau de ladite tête de réseau sur un support de réception unidirectionnel (312D) commençant au niveau de ladite tête de réseau (314), la méthode comprenant les opérations de : transmission desdites informations sous forme de signal modulé par déplacement de phase (PSK) sur une porteuse sur ledit support de transmission à partir dudit noeud source ; réception dudit signal PSK au niveau de ladite tête de réseau (314) pour obtenir un signal reçu, caractérisée en ce que ladite opération de transmission comprend en outre la transmission desdites informations sous forme de signal modulé par déplacement de phase à quatre états décalé (OQPSK) ; ladite opération de réception comprend en outre la réception dudit signal OQPSK avec un récepteur OQPSK (336) ; et après ladite opération de réception, les opérations suivantes sont effectuées : limite stricte dudit signal reçu avec un moyen de circuit limiteur (346) pour obtenir un signal limité à l'intérieur d'une plage dynamique définie; transmission continue d'un signal de réponse partielle de classe une de trois niveaux sur une porteuse continue sur ledit support de réception (312D) à partir de ladite tête de réseau (314) ; modulation de ladite porteuse continue avec ladite configuration binaire desdites informations quand ladite configuration binaire desdites informations est présente et modulation de ladite porteuse continue avec une configuration binaire répétitive quand ladite configuration binaire desdites informations n'est pas présente ; réception de ladite porteuse continue au niveau dudit noeud cible (318) sur ledit support de réception ; détection de ladite porteuse continue modulée avec un moyen détecteur d'enveloppe (374) ; et extraction de ladite configuration binaire desdites informations à partir de ladite porteuse continue modulée en échantillonnant ladite configuration binaire en synchronisation avec une horloge de système.

14. Méthode telle que revendiquée à la revendication 12 ou 13, comprenant l'opération d'alignement dans le temps de la configuration binaire des informations au niveau de la tête de réseau (14 ; 314) de manière à synchroniser la configuration binaire des informations avec la configuration binaire répétitive afin de permettre l'extraction de bits à un moment optimisé.

15. Méthode telle que revendiquée à la revendication 12, 13 ou 14, comprenant l'opération de numérisation d'un signal vocal pour produire les informations.

16. Méthode telle que revendiquée à la revendication 12, 13, 14 ou 15, dans laquelle l'opération de transmission de signal comporte la transmission asynchrone des informations en salves.
